# EUROPÄISCHE PATENTSCHRIFT

(11) **EP 2 715 838 B1**
(45) Veröffentlichungstag und Bekanntmachung des Hinweises auf die Patenterteilung: **29.07.2015**
(21) Anmeldenummer: 12720856.9
(22) Anmeldetag: 09.05.2012
(51) Int. Cl.: H01M 2/20, H01M 10/0525, H01B 5/00, H01M 4/58

(54) **ZELLVERBINDER**
CELL CONNECTOR
CONNECTEUR DE CELLULE

(30) Priorität: 27.05.2011 DE 102011076624
(43) Veröffentlichungstag der Anmeldung: 09.04.2014
(73) Patentinhaber: ElringKlinger AG, 72581 Dettingen (DE); Bayerische Motoren Werke Aktiengesellschaft, 80809 München (DE)
(72) Erfinder: DIEZ, Armin, 73252 Lenningen (DE); GOESMANN, Hubertus, 89564 Auernheim (DE); HAUCK, Axelle, 85579 Neubiberg (DE); ZACHAR, Christian, Gröbenzell 82194 (DE)
(74) Vertreter: Hoeger, Stellrecht & Partner Patentanwälte
(86) Internationale Anmeldenummer: PCT/EP2012/058582
(87) Internationale Veröffentlichungsnummer: WO 2012/163642

(56) Entgegenhaltungen:
- WO-A1-2011/021452
- DE-A1-102009 050 315
- JP-A- 2002 151 045
- JP-A- 2005 317 323
- US-A1- 2006 270 277
- US-A1- 2008 063 929
- US-A1- 2010 266 889

## Beschreibung

Die vorliegende Erfindung betrifft einen Zellverbinder zum elektrisch leitfähigen Verbinden eines ersten Zellterminals einer ersten elektrochemischen Zelle und eines zweiten Zellterminals einer zweiten elektrochemischen Zelle einer elektrochemischen Vorrichtung, wobei der Zellverbinder einen ersten Kontaktbereich zum Verbinden mit dem ersten Zellterminal und einen zweiten Kontaktbereich zum Verbinden mit dem zweiten Zellterminal umfasst.

Solche elektrochemischen Vorrichtungen können insbesondere als elektrische Akkumulatoren, beispielsweise als Lithium-Ionen-Akkumulatoren, ausgebildet sein.

Bei einem Lithium-Ionen-Akkumulator beträgt die Spannungsdifferenz zwischen den beiden Zellterminals (Polen) einer einzelnen Akkumulatorzelle ungefähr 3,6 V. Um ein für viele Anwendungen, beispielsweise in der Automobil-Antriebstechnik, benötigtes höheres Spannungsniveau von beispielsweise ungefähr 360 V zu erhalten, müssen viele solcher Akkumulatorzellen (beispielsweise ungefähr 100) elektrisch in Reihe geschaltet werden.

Die Akkumulatorzellen oder allgemein elektrochemischen Zellen können dabei zu Modulen zusammengefasst werden, welche jeweils mehrere solcher elektrochemischer Zellen enthalten, wobei die Einbaurichtung nebeneinander angeordneter Zellen alterniert, so dass positive und negative Zellterminals abwechselnd nebeneinander liegen.

Diese einander benachbarten Zellterminals entgegensetzter Polarität werden für die Reihenschaltung der Zellen mittels jeweils eines Zellverbinders direkt miteinander verbunden.

Durch unterschiedliche thermische Dehnungen der Anordnung elektrochemischer Zellen und des Zellverbinders (aufgrund von Temperaturunterschieden und/oder aufgrund von Unterschieden in den jeweiligen thermischen Ausdehnungskoeffizienten) treten auf die Zellterminals einwirkende Kräfte auf, die von dem Zellverbinder übertragen werden.

Die US 2006/270277 A1 offenbart einen Zellverbinder gemäß dem Oberbegriff von Anspruch 1.

Der vorliegenden Erfindung liegt die Aufgabe zugrunde, einen Zellverbinder für eine elektrochemische Vorrichtung der eingangs genannten Art zu schaffen, welcher eine große Relativverschiebung zwischen dem ersten Kontaktbereich und dem zweiten Kontaktbereich bereits bei Einwirkung von nur geringen Verformungskräften ermöglicht.

Diese Aufgabe wird durch einen Zellverbinder nach Anspruch 1 gelöst.

Durch die Verwendung eines mehrlagigen Zellverbinders wird ein niedrigeres axiales Flächenmoment genutzt als bei der Verwendung eines einlagigen Zellverbinders.

Dadurch, dass mindestens zwei Materiallagen des mehrlagigen Grundkörpers, vorzugsweise alle Materiallagen des mehrlagigen Grundkörpers, längs einer oder mehrerer Faltlinien einstückig miteinander verbunden sind, wird eine einfache und zuverlässige elektrische Kontaktierung und mechanische Verbindung zwischen mehreren Lagen des Grundkörpers geschaffen, ohne dass hierfür ein zusätzlicher aufwendiger Fügeprozess, beispielsweise ein Schweißvorgang, insbesondere ein Laserschweißvorgang, erforderlich ist.

Somit wird durch Umfalten ein Zellverbinder hergestellt, der beispielsweise in einem Folgeverbundwerkzeug herstellbar ist und dessen Einzellagen nicht durch Verschweißungen oder andere Verbindungsmechanismen miteinander verbunden werden müssen.

Die Umfaltung kann sich je nach Geometrie des Zellverbinders bzw. je nach den Anforderungen an den Zellverbinder seitlich am Zellverbinder oder stirnseitig am Zellverbinder befinden.

Wenn sich die Faltlinie stirnseitig an dem Zellverbinder befindet, kann auf der gegenüberliegenden Seite eine zusätzliche Verbindung der Lagen durch eine weitere Verbindungsmaßnahme, beispielsweise durch eine Verschweißung, erfolgen.

Die Umfaltung längs der Faltlinie ist geometrisch derart auszuführen, dass der für den Stromdurchgang durch den Zellverbinder erforderliche Stromquerschnitt nicht unterschritten wird.

Mindestens zwei Materiallagen, insbesondere alle Materiallagen, des Grundkörpers liegen, insbesondere im ersten Kontaktbereich und/oder im zweiten Kontaktbereich des Zellverbinders, im Wesentlichen flächig aneinander an.

Bei einer besonderen Ausgestaltung der Erfindung ist vorgesehen, dass mindestens eine Faltlinie zumindest abschnittsweise quer, vorzugsweise im Wesentlichen senkrecht, zu einer Verbindungsrichtung, welche ein Zentrum des ersten Kontaktbereichs und ein Zentrum des zweiten Kontaktbereichs miteinander verbindet, verläuft.

Besonders einfach herstellbar ist der erfindungsgemäße Zellverbinder, wenn der Grundkörper keine Schweißverbindungen und/oder außer der Einstückigkeit von Materiallagen keine anderen Verbindungsmechanismen zwischen den Materiallagen des Grundkörpers aufweist.

Ferner ist es günstig, wenn der Grundkörper keine stoffschlüssigen Verbindungen zwischen den Materiallagen des Grundkörpers aufweist.

Der Grundkörper des Zellverbinders umfasst vorzugsweise den ersten Kontaktbereich und/oder den zweiten Kontaktbereich des Zellverbinders.

Der Grundkörper des Zellverbinders ist vorzugsweise einstückig ausgebildet.

Ferner kann vorgesehen sein, dass mindestens eine Faltlinie im Wesentlichen vollständig quer, insbesondere im Wesentlichen senkrecht, zu der Verbindungsrichtung verläuft.

Zumindest ein Abschnitt von mindestens einer Faltlinie kann längs eines seitlichen Randes des ersten Kontaktbereichs oder des zweiten Kontaktbereichs verlaufen.

Ferner kann bei einer besonderen Ausgestaltung des erfindungsgemäßen Zellverbinders vorgesehen sein, dass mindestens eine Faltlinie zumindest abschnittsweise, vorzugsweise im Wesentlichen vollständig, im Wesentlichen parallel zu einer Verbindungsrichtung, welche ein Zentrum des ersten Kontaktbereichs und ein Zentrum des zweiten Kontaktbereichs miteinander verbindet, verläuft.

Ferner kann vorgesehen sein, dass mindestens eine Faltlinie in einem ersten Abschnitt längs eines seitlichen Randes des ersten Kontaktbereichs und in einem zweiten Abschnitt längs eines seitlichen Randes des zweiten Kontaktbereichs verläuft.

In diesem Fall kann insbesondere die Faltlinie zwischen dem ersten Abschnitt und dem zweiten Abschnitt durch eine Ausnehmung unterbrochen sein.

Bei einer besonderen Ausgestaltung des erfindungsgemäßen Zellverbinders kann vorgesehen sein, dass mindestens eine der Materiallagen des Grundkörpers mindestens zwei Teil-Materiallagen umfasst, die längs voneinander verschiedener Faltlinien einstückig mit einer anderen Materiallage verbunden sind. Bei einer solchen Ausführungsform ist also mindestens eine Materiallage des Grundkörpers nicht einteilig ausgebildet, sondern in mindestens zwei Teil-Materiallagen unterteilt.

Dabei verläuft die Trennlinie zwischen den zwei Teil-Materiallagen vorzugsweise im Wesentlichen parallel zu einer Verbindungsrichtung, welche ein Zentrum des ersten Kontaktbereichs und ein Zentrum des zweiten Kontaktbereichs miteinander verbindet.

Mindestens zwei Teil-Materiallagen der geteilten Materiallage des Grundkörpers können dabei beide über voneinander verschiedene Faltlinien einstückig mit derselben anderen Materiallage des Grundkörpers verbunden sein.

Alternativ hierzu ist auch denkbar, dass zwei Teil-Materiallagen der geteilten Materiallage des Grundkörpers längs voneinander verschiedener Faltlinien mit zwei voneinander verschiedenen anderen Materiallagen des Grundkörpers verbunden sind.

Die voneinander verschiedenen Faltlinien, längs welcher die mindestens zwei Teil-Materiallagen einstückig mit einer anderen Materiallage verbunden sind, sind vorzugsweise auf einander gegenüberliegenden Seiten der betreffenden geteilten Materiallage angeordnet.

Bei einer besonderen Ausgestaltung des erfindungsgemäßen Zellverbinders kann ferner vorgesehen sein, dass mindestens eine der Materiallagen des Grundkörpers längs voneinander verschiedener Faltlinien einstückig mit zwei anderen Materiallagen verbunden ist. In diesem Fall weist der Grundkörper des Zellverbinders also mindestens drei einstückig miteinander verbundene Materiallagen auf, was zur Folge hat, dass der elektrische Widerstand des Grundkörpers vermindert wird. Bei gleicher durch den Zellverbinder fließenden Stromstärke heizt sich der Zellverbinder daher weniger auf. Umgekehrt steigt bei gleicher Erwärmung des Zellverbinders die Stromstärke, welche der Zellverbinder tragen kann.

Grundsätzlich können auch mehr als drei Materiallagen des Zellverbinders jeweils über Faltlinien einstückig miteinander verbunden sein, insbesondere in einer ziehharmonikaartigen Faltung.

Die voneinander verschiedenen Faltlinien, längs welcher die mindestens eine Materiallage des Grundkörpers mit zwei anderen Materiallagen des Grundkörpers verbunden ist, sind vorzugsweise auf einander gegenüberliegenden Seiten der betreffenden Materiallage angeordnet.

Um eine besondere zuverlässige und betriebssichere Verbindung der Zellterminals zu ermöglichen, ist bei der Erfindung vorgesehen, dass der Grundkörper des Zellverbinders einen elastisch und/oder plastisch verformbaren Kompensationsbereich umfasst, der den ersten Kontaktbereich und den zweiten Kontaktbereich miteinander verbindet und eine Bewegung dieser Kontaktbereiche relativ zueinander ermöglicht.

Durch diese Möglichkeit zur Bewegung der beiden Kontaktabschnitte des Zellverbinders relativ zueinander dient der elastisch und/oder plastisch verformbare Kompensationsbereich zur zumindest teilweisen Kompensation
a) einer Differenz zwischen einer Längsdehnung des Zellverbinders einerseits und einer Änderung des Abstands zwischen den Längsachsen der durch den Zellverbinder miteinander verbundenen Zellterminals andererseits und/oder
b) einer Differenz zwischen einer Längsdehnung der ersten elektrochemischen Zelle einerseits und einer Längsdehnung der zweiten elektrochemischen Zelle andererseits.

Ergänzend hierzu kann der elastisch und/oder plastisch verformbare Kompensationsbereich auch zur zumindest teilweisen Kompensation von Unterschieden in den Positionen der miteinander zu verbindenden Zellterminals, die auf Fertigungstoleranzen beruhen, insbesondere in der Axialrichtung der elektrochemischen Zellen, dienen.

Um die gewünschte Relativbewegung zwischen den beiden Kontaktabschnitten des Zellverbinders zu ermöglichen, ist der Kompensationsbereich vorzugsweise mit einer Profilierung, insbesondere mit einer Wellenstruktur und/oder einer Zickzackstruktur und/oder einer Sickenstruktur, versehen.

Insbesondere kann vorgesehen sein, dass der Kompensationsbereich des Zellverbinders mindestens eine quer zu einer Verbindungsrichtung, welche ein Zentrum des ersten Kontaktbereichs und ein Zentrum des zweiten Kontaktbereichs miteinander verbindet, verlaufende Kompensationswelle, Kompensationssicke oder Kompensationsknicklinie aufweist.

Der Kompensationsbereich ist nicht in nur einer der Materiallagen des Grundkörpers, sondern in zwei oder mehr aufeinanderliegenden Materiallagen ausgebildet.

Um in einfacher Weise das elektrische Potential an dem Zellverbinder erfassen und auswerten zu können, ist es von Vorteil, wenn der Grundkörper des Zellverbinders mindestens einen Spannungsabgriff umfasst.

An diesen Spannungsabgriff ist über eine geeignete elektrische Leitung eine Auswerteeinheit der elektrochemischen Vorrichtung anschließbar.

Mindestens ein solcher Spannungsabgriff ist vorzugsweise stegförmig ausgebildet.

Um das elektrische Potential am ersten Kontaktbereich und am zweiten Kontaktbereich des Zellverbinders getrennt erfassen und auswerten zu können, ist es günstig, wenn der Grundkörper des Zellverbinders mindestens zwei Spannungsabgriffe umfasst, wobei ein Spannungsabgriff mit dem ersten Kontaktbereich und ein weiterer Spannungsabgriff mit dem zweiten Kontaktbereich verbunden ist.

Bei einer bevorzugten Ausgestaltung des erfindungsgemäßen Zellverbinders ist vorgesehen, dass mindestens ein Spannungsabgriff des Zellverbinders in nur einer Materiallage des Grundkörpers des Zellverbinders ausgebildet ist.

Vorzugsweise sind alle Spannungsabgriffe des Zellverbinders jeweils in nur einer Materiallage des Grundkörpers des Zellverbinders ausgebildet.

Besonders günstig ist es, wenn mehrere, vorzugsweise alle, Spannungsabgriffe des Zellverbinders in derselben Materiallage des Grundkörpers des Zellverbinders ausgebildet sind.

Die Ausdehnung des Grundkörpers des Zellverbinders ist vorzugsweise in einer zur Verbindungsrichtung des Zellverbinders parallelen Längsrichtung des Zellverbinders größer als in einer zur Längsrichtung des Zellverbinders und zur Axialrichtung der mittels des Zellverbinders miteinander verbundenen elektrochemischen Zellen senkrechten Querrichtung des Zellverbinders.

Die elektrochemische Vorrichtung, in welcher der Zellverbinder eingesetzt wird, kann insbesondere als ein Akkumulator, beispielsweise als ein Lithium-Ionen-Akkumulator, ausgebildet sein.

Wenn die erfindungsgemäße elektrochemische Vorrichtung als ein Akkumulator ausgebildet ist, eignet sie sich insbesondere als eine hochbelastbare Energiequelle, beispielsweise für den Antrieb von Kraftfahrzeugen.

Die vorliegende Erfindung betrifft ferner ein Verfahren zum Herstellen eines Zellverbinders, der einen ersten Kontaktbereich zum Verbinden mit einem ersten Zellterminal einer ersten elektrochemischen Zelle und einen zweiten Kontaktbereich zum Verbinden mit einem zweiten Zellterminal einer zweiten elektrochemischen Zelle umfasst.

Der vorliegenden Erfindung liegt die weitere Aufgabe zugrunde, ein solches Verfahren zu schaffen, durch welches ein Zellverbinder hergestellt wird, der eine zuverlässige und betriebssichere Verbindung der Zellterminals ermöglicht.

Diese Aufgabe wird erfindungsgemäß durch ein Verfahren nach Anspruch 15 gelöst.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Längsschnitt durch einen Zellverbinder und jeweils einen Teil der beiden elektrochemischen Zellen, die mittels des Zellverbinders miteinander verbunden sind, wobei der Zellverbinder einen Grundkörper aus zwei Materiallagen umfasst, die längs einer Faltlinie einstückig miteinander verbunden sind;
- Fig. 2: einen schematischen Schnitt durch den Grundkörper des Zellverbinders aus Fig. 1, ohne die durch den Zellverbinder miteinander verbundenen elektrochemischen Zellen;
- Fig. 3: eine schematische perspektivische Darstellung des Zellverbinders aus den Fig. 1 und 2;
- Fig. 4: eine schematische Draufsicht auf eine Grundkörper-Vorform des Zellverbinders aus den Fig. 1 bis 3, aus welcher der Grundkörper durch Faltung gebildet wird;
- Fig. 5: eine schematische Seitenansicht der Grundkörper-Vorform aus Fig. 4, mit der Blickrichtung in Richtung des Pfeiles 5 in Fig. 4;
- Fig. 6: eine schematische perspektivische Darstellung der Grundkörper-Vorform aus den Fig. 4 und 5;
- Fig. 7 bis 9: schematische perspektivische Darstellungen der Grundkörper-Vorform aus Fig. 6 in drei aufeinanderfolgenden Phasen eines Faltvorgangs, durch den der Zellverbinder-Grundkörper gemäß Fig. 3 aus der Grundkörper-Vorform gemäß Fig. 6 gebildet wird;
- Fig. 10: eine schematische perspektivische Darstellung einer zweiten Ausführungsform eines Zellverbinders mit einem Grundkörper, der statt nur eines stegförmigen Spannungsabgriffs zwei stegförmige Spannungsabgriffe umfasst, welche jeweils einem Kontaktbereich des Zellverbinders zugeordnet sind;
- Fig. 11: eine schematische Draufsicht auf eine Grundkörper-Vorform, aus welcher der Grundkörper des Zellverbinders aus Fig. 10 durch einen Faltvorgang gebildet wird;
- Fig. 12: eine schematische Seitenansicht der Grundkörper-Vorform aus Fig. 11, mit der Blickrichtung in Richtung des Pfeiles 12 in Fig. 11;
- Fig. 13: eine schematische perspektivische Darstellung der Grundkörper-Vorform aus den Fig. 11 und 12;
- Fig. 14 bis 16: schematische perspektivische Darstellungen der Grundkörper-Vorform aus den Fig. 11 bis 13 in drei aufeinanderfolgenden Phasen eines Faltvorgangs, durch welchen der Zellverbinder-Grundkörper gemäß Fig. 10 aus der Grundkörper-Vorform gemäß Fig. 13 gebildet wird;
- Fig. 17: eine schematische perspektivische Darstellung einer dritten Ausführungsform eines Zellverbinders mit einem Grundkörper, welcher durch Faltung längs einer parallel zu einer Verbindungsrichtung des Zellverbinders verlaufenden Faltlinie aus einer Grundkörper-Vorform gebildet wird;
- Fig. 18: eine schematische Draufsicht auf eine Grundkörper-Vorform des Zellverbinders aus Fig. 17;
- Fig. 19: eine schematische Seitenansicht der Grundkörper-Vorform aus Fig. 18, mit der Blickrichtung in Richtung des Pfeiles 19 in Fig. 18;
- Fig. 20: eine schematische perspektivische Darstellung der Grundkörper-Vorform aus den Fig. 18 und 19;
- Fig. 21 bis 23: schematische perspektivische Darstellungen der Grundkörper-Vorform aus Fig. 20 in drei aufeinanderfolgenden Phasen eines Faltvorgangs, durch welchen der Zellverbinder-Grundkörper gemäß Fig. 17 aus der Grundkörper-Vorform gemäß Fig. 20 gebildet wird;
- Fig. 24: eine schematische perspektivische Darstellung einer vierten Ausführungsform eines Zellverbinders mit einem Grundkörper, welcher der eine geteilte Materiallage umfasst, welche ihrerseits mindestens zwei Teil-Materiallagen umfasst, die längs voneinander verschiedener Faltlinien einstückig mit einer anderen Materiallage des Grundkörpers verbunden sind;
- Fig. 25: eine schematische Draufsicht von oben auf den Zellverbinder aus Fig. 24;
- Fig. 26: eine schematische Seitenansicht des Zellverbinders aus den Fig. 24 und Fig. 25, mit der Blickrichtung in Richtung des Pfeiles 26 in Fig. 25;
- Fig. 27: eine schematische Draufsicht auf eine Grundkörper-Vorform des Zellverbinders aus Fig. 24;
- Fig. 28: eine schematische perspektivische Darstellung der Grundkörper-Vorform aus Fig. 27;
- Fig. 29 bis 31: schematische perspektivische Darstellungen der Grundkörper-Vorform aus Fig. 28 in drei aufeinanderfolgenden Phasen eines Faltvorgangs, durch welchen der Zellverbinder-Grundkörper gemäß Fig. 24 aus der Grundkörper-Vorform gemäß Fig. 28 gebildet wird;
- Fig. 32: eine schematische perspektivische Darstellung einer fünften Ausführungsform eines Zellverbinders mit einem Grundkörper, der eine mittlere Materiallage umfasst, welche längs voneinander verschiedener Faltlinien einstückig mt zwei anderen Materiallagen des Grundkörpers verbunden ist;
- Fig. 33: eine schematische Draufsicht von oben auf den Zellverbinder aus Fig. 32;
- Fig. 34: eine schematische Seitenansicht des Zellverbinders aus den Fig. 32 und 33, mit der Blickrichtung in Richtung des Pfeiles 34 in Fig. 33;
- Fig. 35: eine schematische Draufsicht auf eine Grundkörper-Vorform des Zellverbinders aus Fig. 32;
- Fig. 36: eine schematische perspektivische Darstellung der Grundkörper-Vorform aus Fig. 35;
- Fig. 37 bis 39: schematische perspektivische Darstellungen der Grundkörper-Vorform aus Fig. 36 in drei aufeinanderfolgenden Phasen eines Faltvorgangs, durch welchen der Zellverbinder-Grundkörper gemäß Fig. 32 aus der Grundkörper-Vorform gemäß Fig. 36 gebildet wird.

Gleiche oder funktional äquivalente Elemente sind in allen Figuren mit denselben Bezugszeichen bezeichnet.

Eine als Ganzes mit 100 bezeichnete elektrochemische Vorrichtung umfasst beispielsweise mehrere (nicht dargestellte) elektrochemische Module, von denen jedes mehrere, beispielsweise jeweils acht oder zwölf, elektrochemische Zellen 102 umfasst, welche jeweils in einer Aufnahme einer (nicht dargestellten) Aufnahmevorrichtung des Moduls aufgenommen sind.

Eine solche Aufnahmevorrichtung kann insbesondere als ein Kühlkörper ausgebildet sein, der mit den darin aufgenommenen elektrochemischen Zellen in wärmeleitendem Kontakt steht, um während des Betriebs der elektrochemischen Vorrichtung 100 Wärme von den elektrochemischen Zellen 102 abzuführen.

Die elektrochemischen Zellen 102 sind in der sie umgebenden Aufnahmevorrichtung so angeordnet und ausgerichtet, dass Axialrichtungen 104 der elektrochemischen Zellen 102, welche parallel zu den mittigen Längsachsen 106 der elektrochemischen Zellen 102 verlaufen, im Wesentlichen parallel zueinander ausgerichtet sind.

Jede der elektrochemischen Zellen 102 erstreckt sich dabei von einem vorderen Zellterminal 108 in der jeweiligen Axialrichtung 104 bis zu einem (nicht dargestellten) hinteren Zellterminal, wobei jedes Zellterminal jeweils einen positiven Pol oder einen negativen Pol der elektrochemischen Zelle 102 bildet.

Die mittigen Längsachsen 106 der elektrochemischen Zellen 102 sind dabei zugleich mittige Längsachsen der Zellterminals 108 der jeweiligen elektrochemischen Zellen 102.

In einem Modul sind einander benachbarte elektrochemische Zellen 102 jeweils so ausgerichtet, dass die auf derselben Seite des Moduls angeordneten Zellterminals zweier benachbarter Zellen 102a, 102b einander entgegengesetzte Polarität aufweisen.

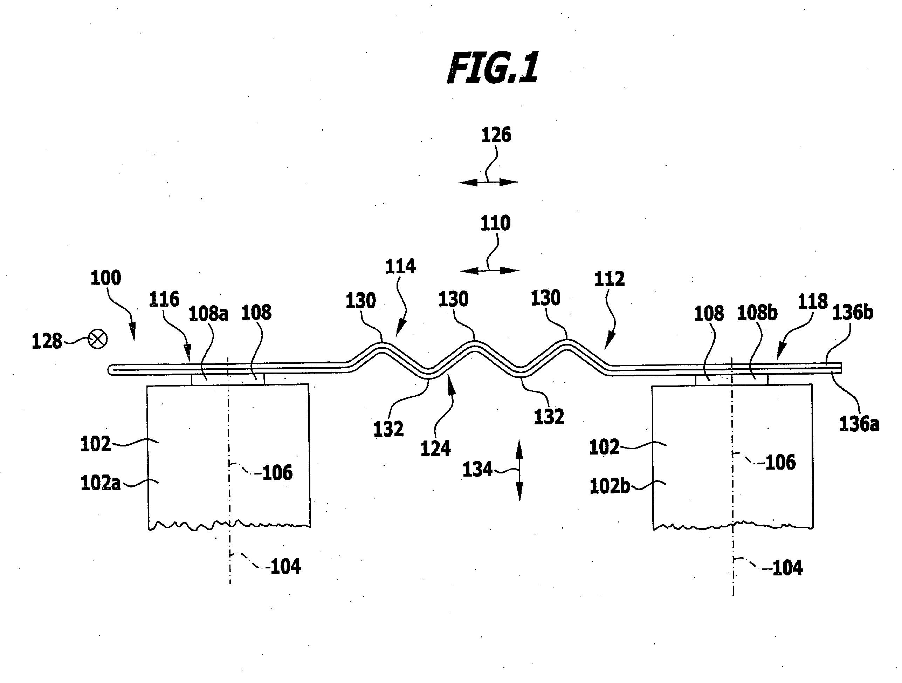

So bildet beispielsweise in der in Fig. 1 dargestellten Zellanordnung das vordere Zellterminal 108a der elektrochemischen Zelle 102a einen negativen Pol der betreffenden elektrochemische Zelle 102a, währen das vordere Zellterminal 108b der in einer Verbindungsrichtung 110 der elektrochemischen Zelle 102a benachbarten elektrochemischen Zelle 102b einen positiven Pol der elektrochemischen Zelle 102b bildet.

Die elektrochemische Vorrichtung 100 kann insbesondere als ein Akkumulator, insbesondere als ein Lithium-Ionen-Akkumulator, beispielsweise des Typs LiFePO₄, ausgebildet sein.

Die elektrochemischen Zellen 102 der elektrochemischen Module können entsprechend als Akkumulatorzellen, insbesondere als Lithium-Ionen-Akkumulatorzellen, beispielsweise vom Typ LiFePO₄, ausgebildet sein.

Jedes elektrochemische Modul umfasst ferner mehrere Zellverbinder 112, mittels welcher die Zellterminals 108 einander benachbarter elektrochemischer Zellen 102 mit unterschiedlicher Polarität elektrisch leitend miteinander verbunden sind, um auf diese Weise alle elektrochemischen Zellen 102 eines elektrochemischen Moduls elektrisch in Reihe zu schalten.

Dabei verbindet jeder Zellverbinder 112 ein erstes Zellterminal 108a negativer Polarität mit einem zweiten Zellterminal 108b positiver Polarität einer benachbarten elektrochemischen Zelle 102.

Um alle elektrochemischen Zellen 102 eines Moduls elektrisch in Reihe zu schalten, sind außer den vorderen Zellterminals 108 einander benachbarter elektrochemischer Zellen auch die hinteren Zellterminals einander benachbarter elektrochemischer Zellen eines Moduls durch (nicht dargestellte) Zellverbinder miteinander verbunden.

Jeder der Zellverbinder 112, welche jeweils ein erstes Zellterminal 108a und ein zweites Zellterminal 108b elektrisch leitend miteinander verbinden, umfasst einen Grundkörper 114 mit einem ersten Kontaktbereich 116, der im montierten Zustand des Zellverbinders 112 mit einem (beispielsweise negativen) ersten Zellterminal 108a einer elektrochemischen Zelle 102a verbunden ist, und einem zweiten Kontaktbereich 118, der im montierten Zustand des Zellverbinders 112 mit einem (beispielsweise positiven) zweiten Zellterminal 108b einer anderen elektrochemischen Zelle 102b verbunden ist.

Der Grundkörper 114 des Zellverbinders 112 ist vorzugsweise als ein Stanzbiegeteil hergestellt.

Der Grundkörper 114 des Zellverbinders 112 kann insbesondere aus Aluminium, Kupfer, Zinn, Zink, Eisen, Gold oder Silber oder aus einer Legierung eines oder mehrerer der vorstehend genannten Metalle gebildet sein.

Ferner kann der Grundkörper 114 des Zellverbinders 112 auch aus einem anderen Metall oder aus einer anderen metallischen Legierung gebildet sein.

Außerdem kann der Grundkörper 114 des Zellverbinders 112 grundsätzlich auch aus einem leitfähigen Kunststoffmaterial und/oder aus einem leitfähigen Kohlenstoffmaterial gebildet sein.

Der erste Kontaktbereich 116 und der zweite Kontaktbereich 118 des Zellverbinders 112 sind vorzugsweise stoffschlüssig mit dem jeweils zugeordneten Zellterminal 108a bzw. 108b verbunden.

Eine solche stoffschlüssige Verbindung kann insbesondere durch Verschweißung, insbesondere Laserverschweißung, oder durch Verlötung hergestellt werden.

Je nach dem Material, aus welchem die Zellterminals 108a und 108b gebildet sind, kann zur Erleichterung der Herstellung einer stoffschlüssigen Verbindung mit dem Zellverbinder 112 vorgesehen sein, dass in dem jeweiligen Kontaktbereich 116, 118 des Zellverbinders 112 und/oder an dem jeweiligen Zellterminal 108a bzw. 108b eine oder mehrere Beschichtungen, insbesondere aus einem metallischen Material, angeordnet sind.

Ferner kann vorgesehen sein, dass zur Erleichterung der Herstellung einer stoffschlüssigen Verbindung zwischen dem Zellverbinder 112 und den Zellterminals 108a, 108b eines oder mehrere (nicht dargestellte) Zwischenelemente zwischen dem jeweiligen Kontaktbereich 116, 118 des Zellverbinders 112 einerseits und dem jeweils zugeordneten Zellterminal 108a bzw. 108b andererseits angeordnet sind.

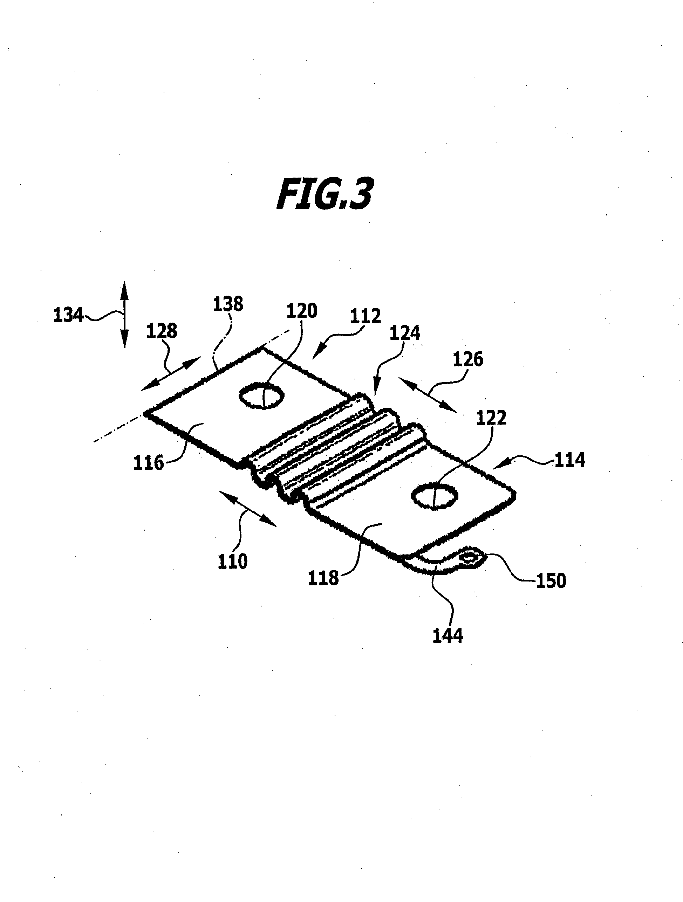

Um auch nach dem stoffschlüssigen Verbinden des Zellverbinders 112 mit den Zellterminals 108a und 108b einen direkten Zugang, beispielsweise für Messzwecke, zu den Zellterminals 108a und 108b zu ermöglichen, kann der erste Kontaktbereich 116 des Zellverbinders 112 mit einer, beispielsweise im Wesentlichen kreisförmigen, Durchtrittsöffnung 120 und der zweite Kontaktbereich 118 des Grundkörpers 114 mit einer, beispielsweise ebenfalls im Wesentlichen kreisförmigen, Durchtrittsöffnung 122 versehen sein (siehe Fig. 3).

Im Betrieb der elektrochemischen Vorrichtung 100 kann es aufgrund unterschiedlicher Temperaturen und/oder aufgrund unterschiedlicher thermischer Ausdehnungskoeffizienten der Zellverbinder 112 einerseits und der Aufnahmevorrichtung für die elektrochemischen Zellen 102 andererseits zu einer Differenz zwischen einer Längsdehnung der Zellverbinder 112 einerseits und einer Änderung des Abstands zwischen den Längsachsen 106 der durch die Zellverbinder 112 miteinander verbundenen Zellterminals 108a, 108b andererseits kommen. Durch eine temperaturänderung werden die Relativpositionen der durch einen Zellverbinder 112 miteinander verbundenen Zellterminals 108a, 108b in der senkrecht zur Axialrichtung 104 der elektrochemischen Zellen 102 ausgerichteten Verbindungsrichtung 110 verändert.

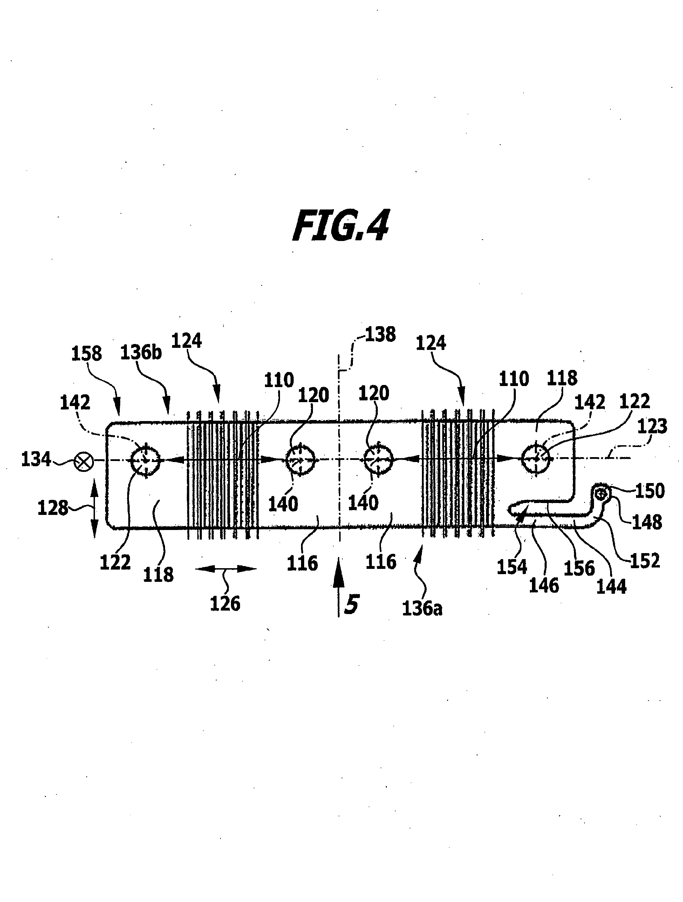

Die Verbindungsrichtung 110 liegt in einer Ebene 123, welche die Längsachsen 106 der elektrochemischen Zellen 102a und 102b enthält (siehe Fig. 4).

Ferner kann es aufgrund unterschiedlicher Längsdehnungen der miteinander durch einen Zellverbinder 112 verbundenen elektrochemischen Zellen 102 zu einer Veränderung der Relativpositionen zwischen den miteinander verbundenen Zellterminals 108a, 108b längs der Axialrichtung 104 der miteinander verbundenen elektrochemischen Zellen 102 kommen.

Um solche Differenzen zwischen einer Längsdehnung des Zellverbinders 112 einerseits und einer Änderung des Abstands zwischen den Längsachsen 106 der durch den Zellverbinder 112 miteinander verbundenen Zellterminals 108a, 108b andererseits und/oder solche Differenzen zwischen einer Längsdehnung einer ersten elektrochemischen Zelle 102a und einer zweiten elektrochemischen Zelle 102b, die durch den Zellverbinder 112 miteinander verbunden sind, kompensieren zu können, kann vorgesehen sein, dass der Zellverbinder 112 einen elastisch und/oder plastisch verformbaren Kompensationsbereich 124 umfasst, welcher zwischen dem ersten Kontaktbereich 116 und dem zweiten Kontaktbereich 118 des Zellverbinders 112 angeordnet ist und die beiden Kontaktbereiche 116 und 118 miteinander verbindet.

Vorzugsweise ist der Grundkörper 114 des Zellverbinders 112 mit einem solchen Kompensationsbereich 124 versehen.

Bei der in den Figuren dargestellten Ausführungsform eines Zellverbinders 112 weist der verformbare Kompensationsbereich 124 eine Wellenstruktur auf, wobei die Wellenstruktur eine oder mehrere, beispielsweise drei, Wellen mit einer parallel zur Axialrichtung 104 der durch den Zellverbinder 112 zu verbindenden Zellen 102 und im Wesentlichen senkrecht zu den Kontaktflächen, mit denen der Zellverbinder 112 im montierten Zustand am ersten Zellterminal 108a bzw. am zweiten Zellterminal 108b anliegt, gerichteten Amplitude umfasst. Diese Wellen weisen mehrere, beispielsweise drei, quer, vorzugsweise im Wesentlichen senkrecht, zur Axialrichtung 104 der elektrochemischen Zellen 102 und quer, vorzugsweise im Wesentlichen senkrecht, zu einer Längsrichtung 126 des Zellverbinders 112 und im Wesentlichen parallel zu einer Querrichtung 128 des Zellverbinders 112, welche senkrecht zur Längsrichtung 126 des Zellverbinders 112 und senkrecht zur Axialrichtung 104 der elektrochemischen Zellen 102 ausgerichtet ist, verlaufende Wellenberge 130 und mehrere, zwischen den Wellenbergen 130 angeordnete und quer, vorzugsweise im Wesentlichen senkrecht, zur Axialrichtung 104 der elektrochemischen Zellen 102 und quer, vorzugsweise im Wesentlichen senkrecht, zur Längsrichtung 126 des Zellverbinders 112 und im Wesentlichen parallel zur Querrichtung 128 des Zellverbinders 112 verlaufende Wellentäler 132 auf.

Die Längsrichtung 126 des Zellverbinders verläuft parallel zur Verbindungsrichtung 110, und die Querrichtung 128 des Zellverbinders 112 verläuft senkrecht zur Verbindungsrichtung 110.

Die Wellenberge 130 stehen in einer zu den Kontaktflächen des Zellverbinders 112 senkrechten Kontaktrichtung 134 des Zellverbinders 112, die im montierten Zustand des Zellverbinders 112 mit der Axialrichtung 104 der elektrochemischen Zellen 102 übereinstimmt, nach oben vor, während die Wellentäler 132 in der Kontaktrichtung 134 nach unten (zu den zu verbindenden Zellen 102 hin) vorstehen.

Durch die gewellte Struktur des verformbaren Kompensationsbereichs 124 des Zellverbinders 112 wird erreicht, dass der Kompensationsbereich 124 in einfacher Weise derart elastisch und/oder plastisch verformbar ist, dass der zweite Kontaktbereich 118 relativ zu dem ersten Kontaktbereich 116 sowohl in der Axialrichtung 104 der elektrochemischen Zellen 102 als auch in der Längsrichtung 126 des Zellverbinders 112 verschoben werden kann, um die vorstehend beschriebenen Differenzen in den Relativpositionen der durch den Zellverbinder 112 miteinander zu verbindenden Zellterminals 108a und 108b auszugleichen. Hierdurch kann das Auftreten übermäßiger mechanischer Spannungen an den Verbindungsstellen zwischen dem Zellverbinder 112 einerseits und dem ersten Zellterminal 108a sowie dem zweiten Zellterminal 108b andererseits vermieden werden.

Um auch sehr große Relativverschiebungen zwischen dem ersten Kontaktbereich 116 und dem zweiten Kontaktbereich 118 des Zellverbinders 114 zu ermöglichen und/oder eine große Relativverschiebung der Kontaktbereiche 116 und 118 bereits bei Einwirkung von nur geringen Verformungskräften zu ermöglichen, ist der Grundkörper 114 des Zellverbinders 112 mehrlagig, im dargestellten Ausführungsbeispiel zweilagig, ausgeführt, wodurch ein niedriges axiales Flächenmoment für die Verformung des Kompensationsbereichs 124 des Grundkörpers 114 genutzt wird.

Insbesondere kann der Grundkörper 114 eine erste Materiallage 136a, welche im montierten Zustand des Zellverbinders 112 den Zellterminals 108 der miteinander zu verbindenden elektrochemischen Zellen 102 zugewandt ist, und eine zweite Materiallage 136b, welche im montierten Zustand des Zellverbinders 112 den Zellterminals 108 der miteinander zu verbindenden elektrochemischen Zellen 102 abgewandt ist, umfassen.

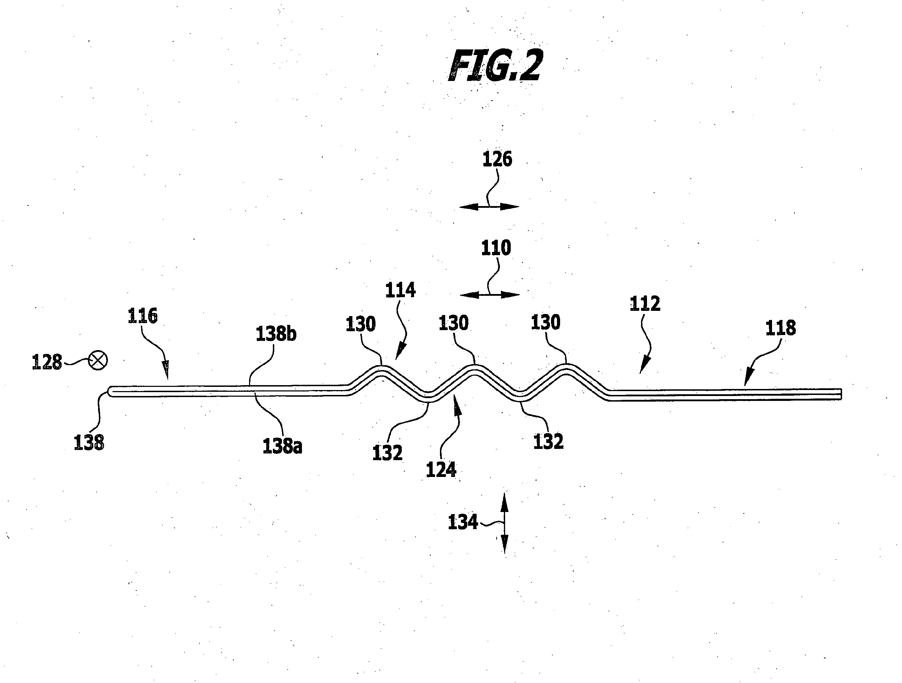

Wie am besten aus Fig. 2 zu ersehen ist, liegen dabei die erste Materiallage 136a und die zweite Materiallage 136b im Wesentlichen flächig aneinander an.

Ferner sind die Materiallagen 136a und 136b längs einer Faltlinie 138, welche parallel zur Querrichtung 128 des Zellverbinders 112 sowie senkrecht zur Kontaktrichtung 134 und senkrecht zur Verbindungsrichtung 110 des Zellverbinders 112 verläuft und einen dem zweiten Kontaktbereich 118 abgewandten hinteren Rand des ersten Kontaktbereichs 116 bildet (siehe Fig. 3), einstückig miteinander verbunden.

Die Verbindungsrichtung 110 des Zellverbinders 112 verbindet vorzugsweise ein Zentrum 140 des ersten Kontaktbereichs 116 und ein Zentrum des zweiten Kontaktbereichs 142 miteinander, wobei das Zentrum des ersten Kontaktbereichs 140 mit dem Mittelpunkt der Durchgangsöffnung 120 und das Zentrum 142 des zweiten Kontaktbereichs 118 mit dem Mittelpunkt der zweiten Durchgangsöffnung 122 des zweiten Kontaktbereichs 118 zusammenfällt.

Eine der Materiallagen 136a, 136b, vorzugsweise die im montierten Zustand des Zellverbinders 112 den Zellterminals 108 zugewandte erste Materiallage 136a, weist vorzugsweise einen, beispielsweise stegförmigen, Spannungsabgriff 144 auf, welcher sich von einem der Kontaktbereiche 116, 118, beispielsweise vom zweiten Kontaktbereich 118, aus wegerstreckt.

Insbesondere kann vorgesehen sein, dass der stegförmige Spannungsabgriff 144 einen mit dem jeweils zugeordneten Kontaktbereich verbundenen Anfangsabschnitt 146 aufweist, welcher beispielsweise im Wesentlichen parallel zur Verbindungsrichtung 110 verläuft, und einen dem jeweils zugeordneten Kontaktbereich abgewandten Endabschnitt 148 aufweist, welcher beispielsweise im Wesentlichen parallel zur Querrichtung 128 des Zellverbinders 112 verläuft und mit einer Kontaktierungsstelle 150 versehen ist, an welcher der Spannungsabgriff 144 mit einer elektrischen Leitung zum Abgreifen einer Spannung verbindbar ist.

Der Anfangsabschnitt 146 und der Endabschnitt 148 des stegförmigen Spannungsabgriffs 144 sind vorzugsweise über einen gekrümmten Mittelabschnitt 152 miteinander verbunden.

Der Anfangsabschnitt 146 des stegförmigen Spannungsabgriffs 144 ist vorzugsweise durch eine beispielsweise im Wesentlichen in der Verbindungsrichtung 110 des Zellverbinders 112 verlaufende Ausnehmung 154 von einem ebenfalls vorzugsweise im Wesentlichen parallel zur Verbindungsrichtung 110 des Zellverbinders 112 verlaufenden seitlichen Rand 156 des jeweils zugeordneten Kontaktbereichs, beispielsweise des zweiten Kontaktbereichs 118, getrennt.

Zur Herstellung des Grundkörpers 114 des Zellverbinders 112, wie er in den Fig. 1 bis 3 dargestellt ist, wird wie folgt vorgegangen:

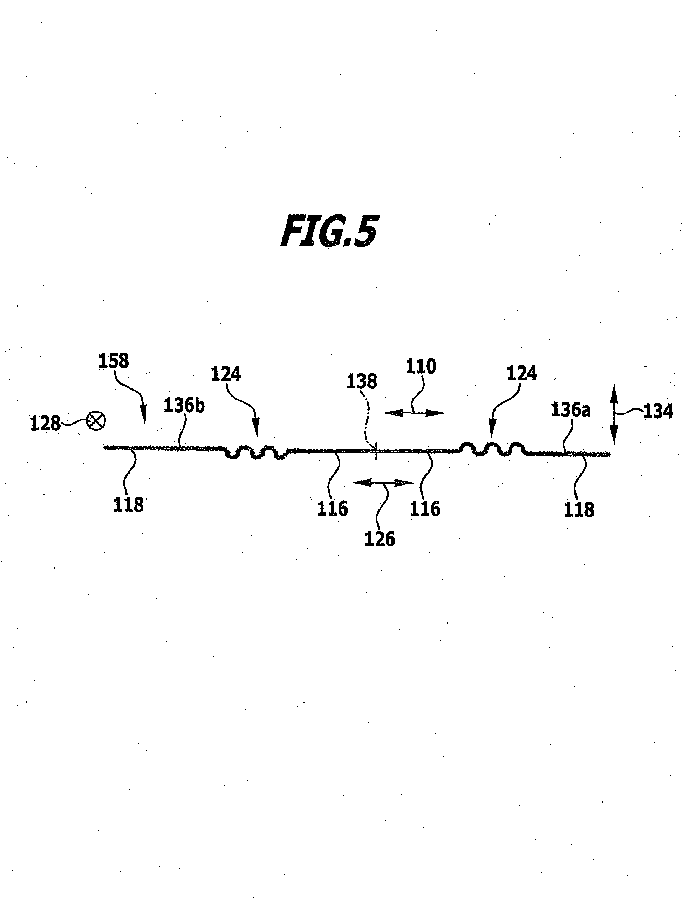

Zunächst wird eine in den Fig. 4 bis 6 dargestellte Grundkörper-Vorform 158 aus einem Ausgangsmaterial, beispielsweise aus einem blechförmigen Ausgangsmaterial, herausgetrennt, beispielsweise ausgestanzt oder (zum Beispiel mittels eines Lasers) herausgeschnitten.

In der Grundkörper-Vorform 158 liegen die Materiallagen 136a und 136b zunächst in derselben Ebene nebeneinander, wobei die Materiallagen 136a, 136b längs der späteren Faltlinie 138 aneinandergrenzen.

Bei der in den Fig. 4 bis 6 dargstellten Ausführungsform einer Grundkörper-Vorform 158 sind die erste Materiallage 136a und die zweite Materiallage 136b in der Längsrichtung 126 des Zellverbinders 112, welche der Verbindungsrichtung 110 entspricht, hintereinander angeordnet.

In die Grundkörper-Vorform 158 werden durch geeignete Umformvorgänge, insbesondere Präge- oder Tiefziehvorgänge, die Wellenberge 130 und Wellentäler 132 des Kompensationsbereichs 124 eingebracht, und zwar jeweils zweifach, einmal in den Kompensationsbereich 124 der ersten Materiallage 136a und einmal in den Kompensationsbereich 124 der zweiten Materiallage 136b.

Die ersten Durchtrittsöffnungen 120 und die zweiten Durchtrittsöffnungen 122 können bereits vor diesen Umformvorgängen, beispielsweise zusammen mit dem Heraustrennen der Außenkontur der Grundkörper-Vorform 158 aus dem Ausgangsmaterial, oder nach den Ümformvorgängen aus der Grundkörper-Vorform 158 herausgetrennt werden.

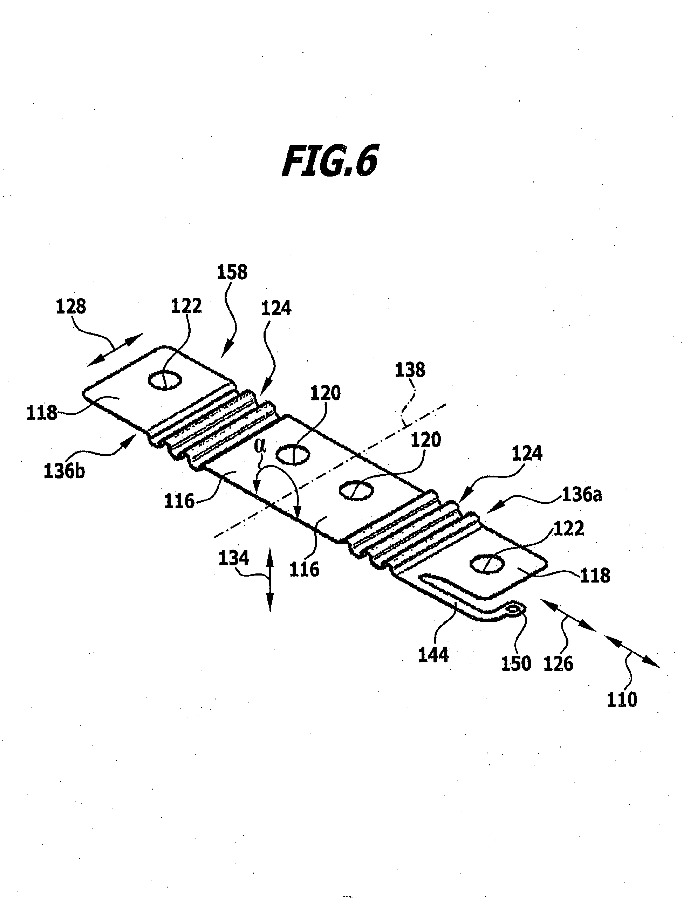

Anschließend wird der in Fig. 3 dargestellte Zellverbinder 112 mit mehrlagigem Grundkörper 114 aus der in Fig. 6 dargestellten Grundkörper-Vorform 158 dadurch hergestellt, dass eine der beiden Materiallagen 136a, 136b längs der Faltlinie 138 auf die jeweils andere Materiallage 136b, 136a gefaltet wird.

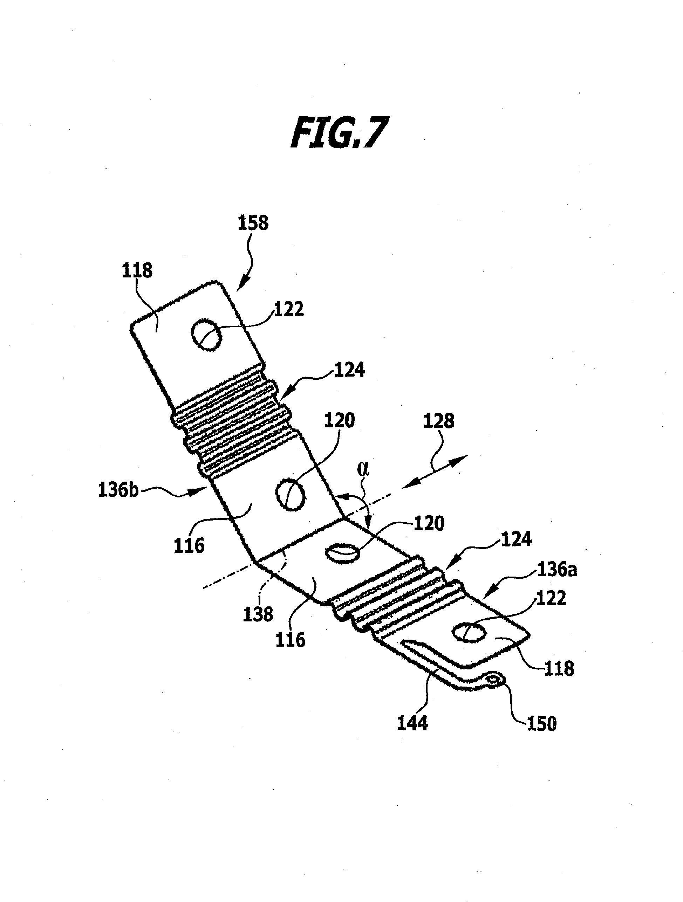

In den Fig. 7 bis 9 sind verschiedene zeitlich aufeinanderfolgende Phasen eines solchen Umfaltvorgangs dargestellt, bei welchem, im gezeigten Ausführungsbeispiel, die zweite Materiallage 136b auf die erste Materiallage 136a umgefaltet wird.

Bei diesem Umfaltvorgang wird der Winkel α, welchen die Hauptebenen der beiden Materiallagen 136a, 136b miteinander einschließen, von 180° (in der in Fig. 6 dargestellten Grundkörper-Vorform 158) kontinuierlich verringert, bis dieser Winkel im fertigen Grundkörper 114 des Zellverbinders 112 (siehe Fig. 3) 0° beträgt und die zweite Materiallage 136b im Wesentlichen flächig an der erste Materiallage 136a anliegt.

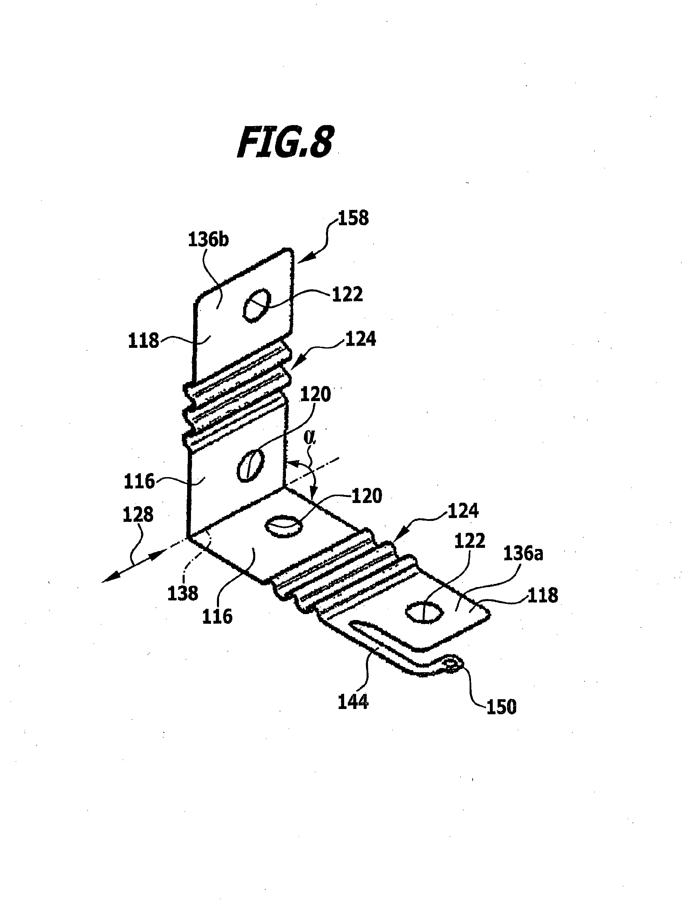

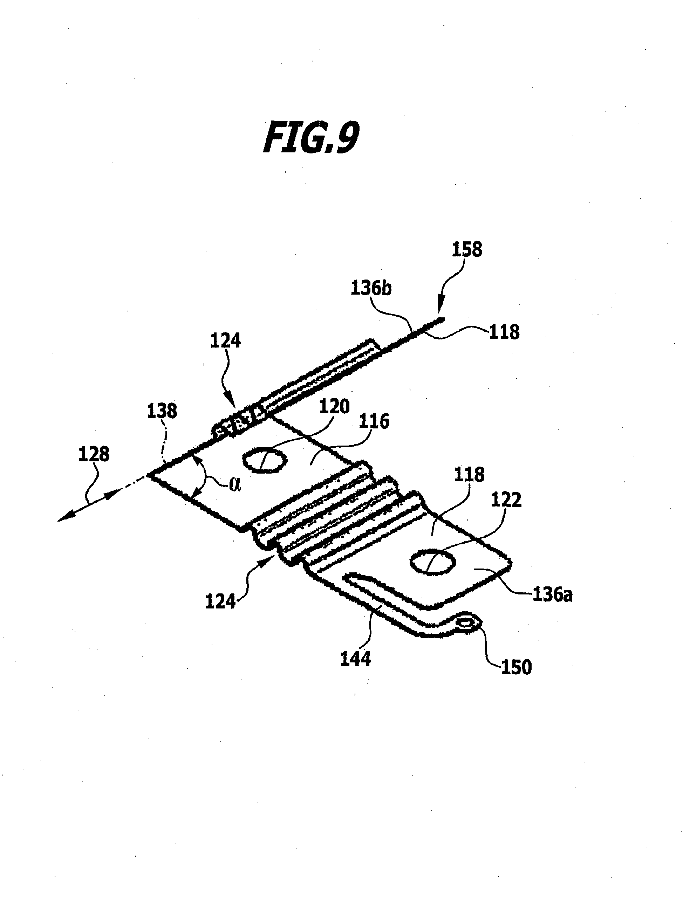

In den in den Fig. 7 bis 9 dargestellten Zwischenphasen des Umfaltvorgangs beträgt der Winkel α zwischen den beiden Materiallagen 136a und 136b jeweils 135° (Fig. 7), 90° (Fig. 8) bzw. 45° (Fig. 9).

Da die beiden Materiallagen 136a und 136b stirnseitig, das heißt längs einer in der Querrichtung 128 des Zellverbinders 112 verlaufenden Faltlinie 138, einstückig miteinander verbunden sind, ist es günstig, wenn die beiden Materiallagen 136a, 136b an der der Faltlinie 138 gegenüberliegenden Stirnseite durch eine zusätzliche Maßnahme, beispielsweise durch Verschweißung, miteinander verbunden sind, um ein unbeabsichtigtes Lösen der Materiallagen 136a, 136b voneinander, unter Wiederauffaltung des Grundkörpers 114, zu verhindern.

Alternativ hierzu kann aber auch vorgesehen sein, dass die Materiallagen 136a, 136b des Grundkörpers 114 außer durch die einstückige Verbindung längs der Faltlinie 138 durch keine weiteren Maßnahmen (also insbesondere weder stoffschlüssig noch kraftschlüssig) miteinander verbunden sind, insbesondere durch keine zusätzlichen Verschweißungen.

Die Umfaltung ist geometrisch derart ausgeführt, dass der erforderliche Stromquerschnitt des Zellverbinders 112 nicht oder zumindest nicht wesentlich unterschritten wird.

Der so hergestellte Zellverbinder 112 wird in den Kontaktbereichen 116 und 118, vorzugsweise stoffschlüssig, mit jeweils einem Zellterminal 108 einer elektrochemischen Zelle 102 verbunden.

Die Kontaktstelle 150 des Spannungsabgriffs 144 wird über eine (nicht dargestellte) Verbindungsleitung an eine (ebenfalls nicht dargestellte) Auswertungseinheit der elektrochemischen Vorrichtung 100 angeschlossen.

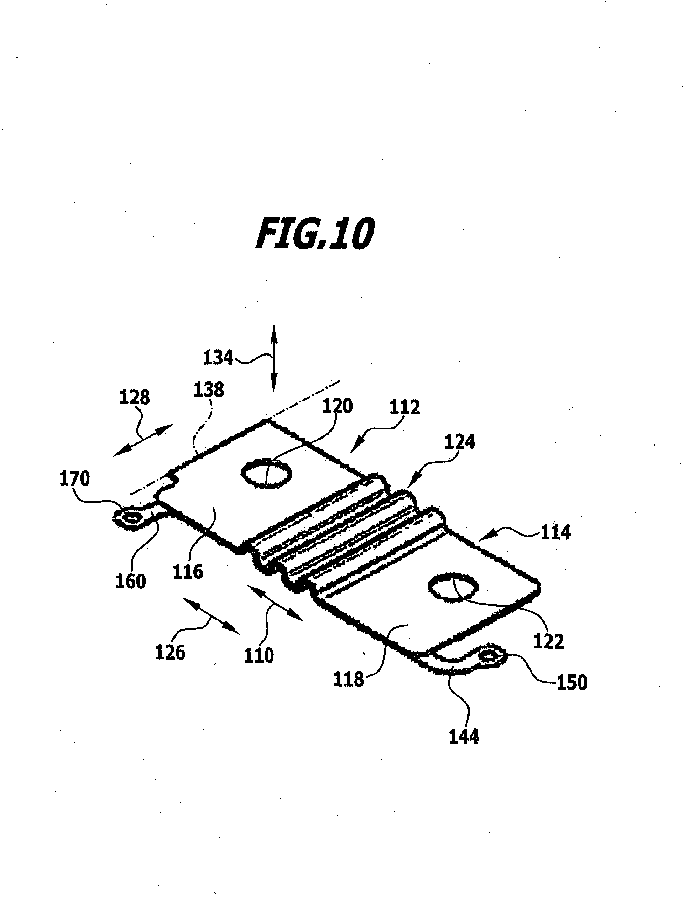

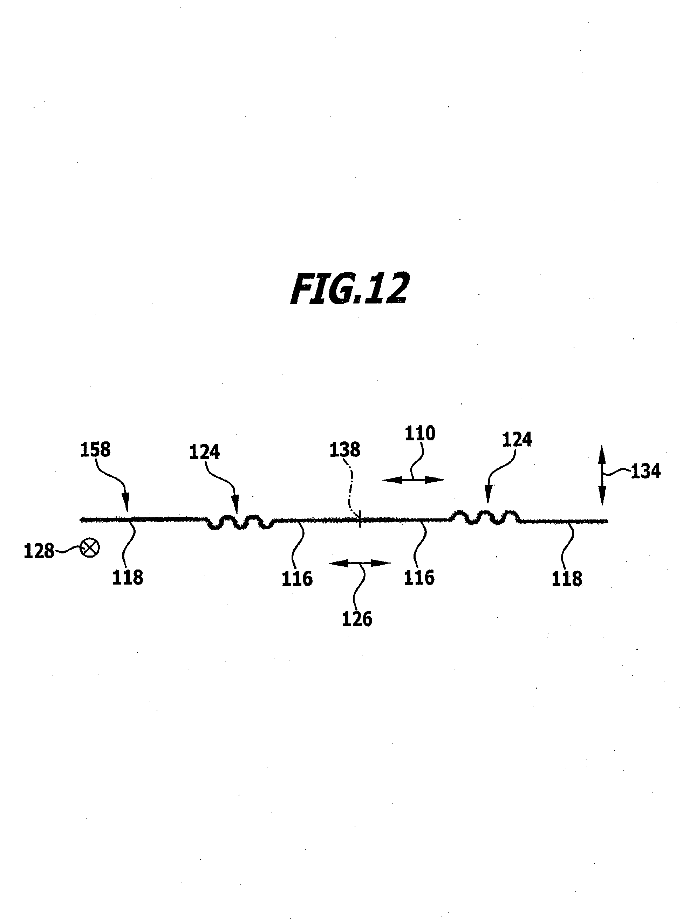

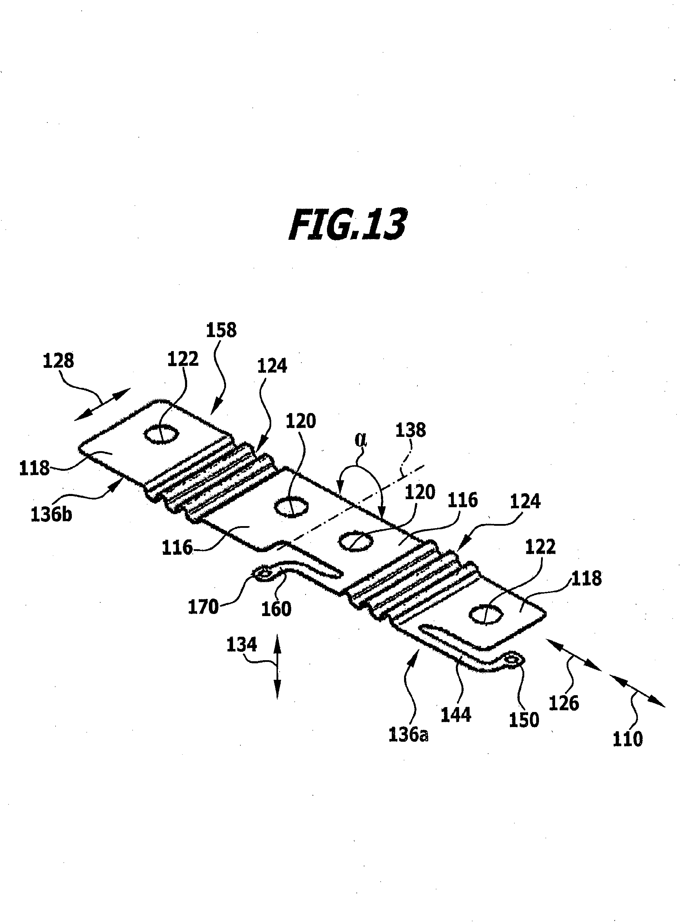

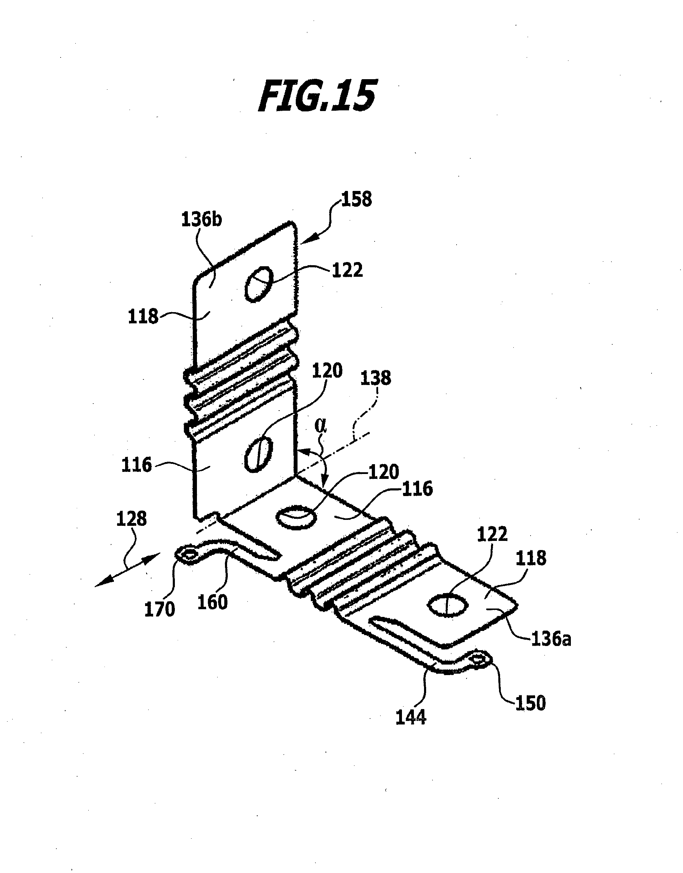

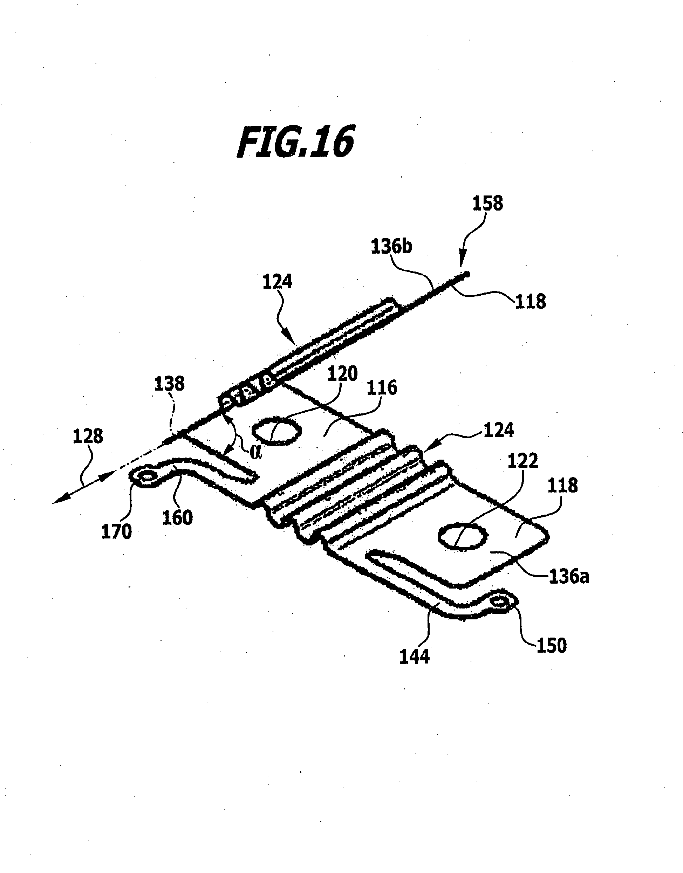

Eine in den Fig. 10 bis 16 dargestellte zweite Ausführungsform eines Zellverbinders 112 zum elektrisch leitenden Verbinden eines ersten Zellterminals 108a einer ersten elektrochemischen Zelle 102a und eines zweiten Zellterminals 108b einer zweiten elektrochemischen Zelle 102b unterscheidet sich von der vorstehend beschriebenen, in den Fig. 1 bis 9 dargestellten ersten Ausführungsform dadurch, dass der Grundkörper 114 des Zellverbinders 112 bei der zweiten Ausführungsform nicht nur einen ersten Spannungsabgriff 144 umfasst, der beispielsweise mit dem zweiten Kontaktbereich 118 verbunden ist, sondern zusätzlichen einen weiteren, zweiten Spannungsabgriff 160, der mit dem jeweils anderen Kontaktbereich, also im vorliegenden Ausführungsbeispiel mit dem ersten Kontaktbereich 116, verbunden ist.

Hierdurch ist es möglich, bei dieser zweiten Ausführungsform die elektrischen Potentiale des ersten Kontaktbereichs 116 (und damit des ersten Zellterminals 108a) und des zweiten Kontaktbereichs 118 (und damit des zweiten Zellterminals 108b) separat voneinander zu erfassen und auszuwerten.

Der zweite Spannungsabgriff 160 ist vorzugsweise in nur einer der Materiallagen 136a, 136b des Grundkörpers 114 des Zellverbinders 112 ausgebildet.

Vorzugsweise ist der zweite Spannungsabgriff 160 in der den Zellterminals 108 der miteinander zu verbindenden elektrochemischen Zellen 102 zugewandten ersten Materiallage 136a ausgebildet.

Besonders günstig ist es, wenn der erste Spannungsabgriff 144 und der zweite Spannungsabgriff 160 in derselben Materiallage 136a des Grundkörpers 114 des Zellverbinders 112 ausgebildet sind.

Der zweite Spannungsabgriff 160 umfasst beispielsweise einen Anfangsabschnitt 162, welcher sich beispielsweise in der Längsrichtung 126 von dem ersten Kontaktbereich 116 weg erstreckt und durch eine Ausnehmung 164 von einem ebenfalls im Wesentlichen in der Längsrichtung 126 verlaufenden seitlichen Rand 166 des ersten Kontaktbereichs 116 beabstandet ist, und einen sich vorzugsweise in der Querrichtung 128 des Zellverbinders 112 erstreckenden Endabschnitt 168, welcher mit einer Kontaktstelle 170 versehen ist.

Der Endabschnitt 168 und der Anfangsabschnitt 162 des zweiten Spannungsabgriffs 160 sind über einen gekrümmten Mittelabschnitt 172 miteinander verbunden.

Die Kontaktstelle 170 des zweiten Spannungsabgriffs 160 ist bei der Montage des Zellverbinders 112 über eine (nicht dargestellte) Leitung an die Auswerteeinheit der elektrochemischen Vorrichtung 100 anschließbar.

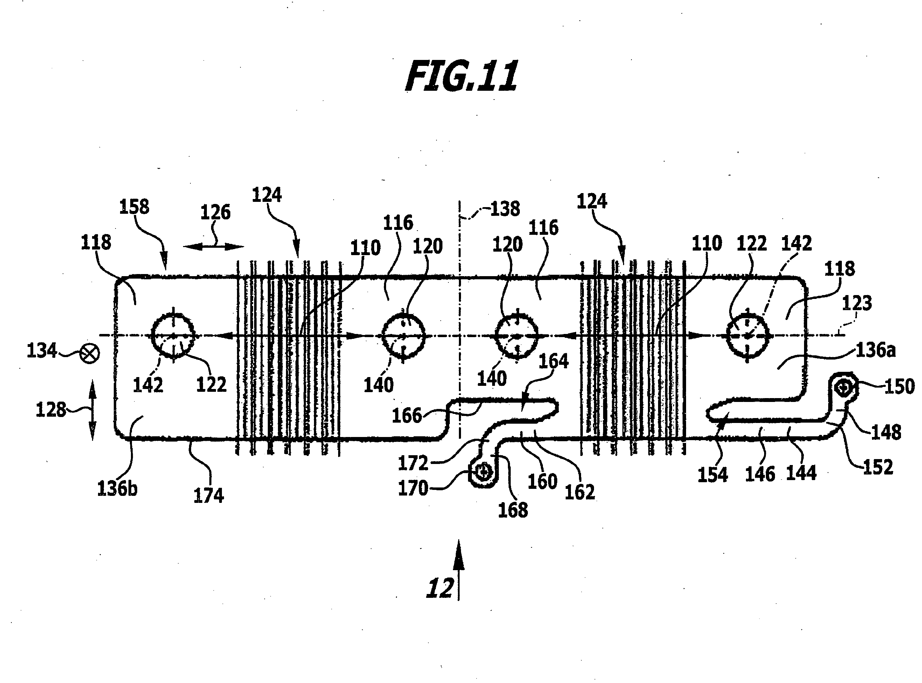

Wie am Besten aus Fig. 11 zu ersehen ist, steht der Endabschnitt 168 des zweiten Spannungsabgriffs 160 in der Querrichtung 128 des Zellverbinders 112 über die Außenkontur 174 der übrigen Bestandteile des Grundkörpers 114, insbesondere die Außenkontur 174 der Kontaktbereiche 116 und 118, des Kompensationsbereichs 124 und des ersten Spannungsabgriffs 144, über.

Fig. 10 zeigt eine perspektivische Darstellung des fertigen Zellverbinders 112 der zweiten Ausführungsform.

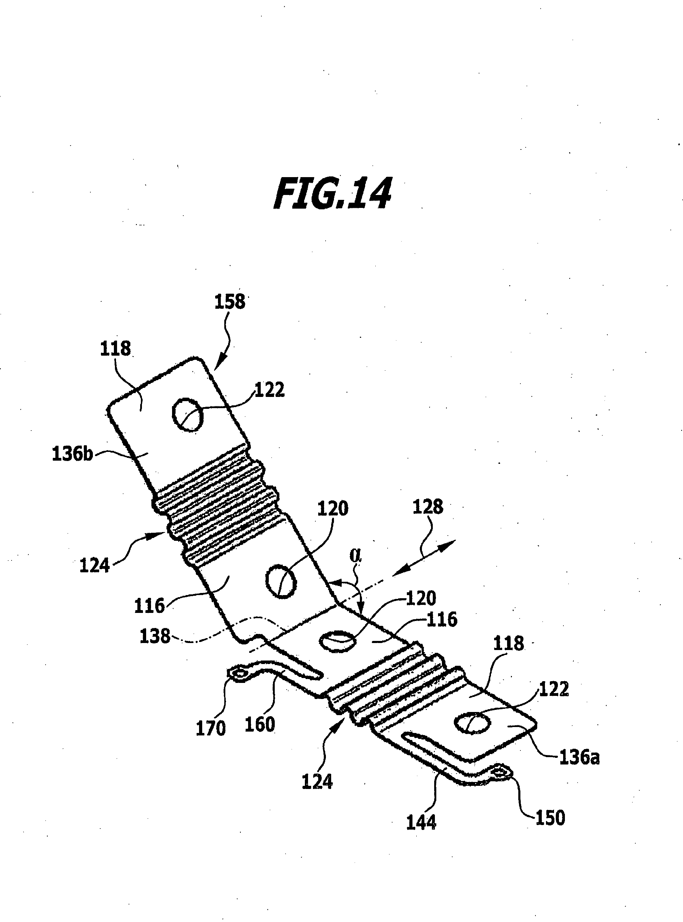

Die Fig. 11 bis 13 zeigen eine Grundkörper-Vorform 158, aus welcher der Zellverbinder gemäß Fig. 10 durch einen Umfaltvorgang herstellbar ist, von dem drei aufeinanderfolgende Phasen in den Fig. 14 bis 16 dargestellt sind.

Im Übrigen stimmt die in den Fig. 10 bis 16 dargestellte zweite Ausführungsform eines Zellverbinders 112 hinsichtlich Aufbau, Funktion und Herstellungsweise mit der in den Fig. 1 bis 9 dargestellten ersten Ausführungsform überein, auf deren vorstehende Beschreibung insoweit Bezug genommen wird.

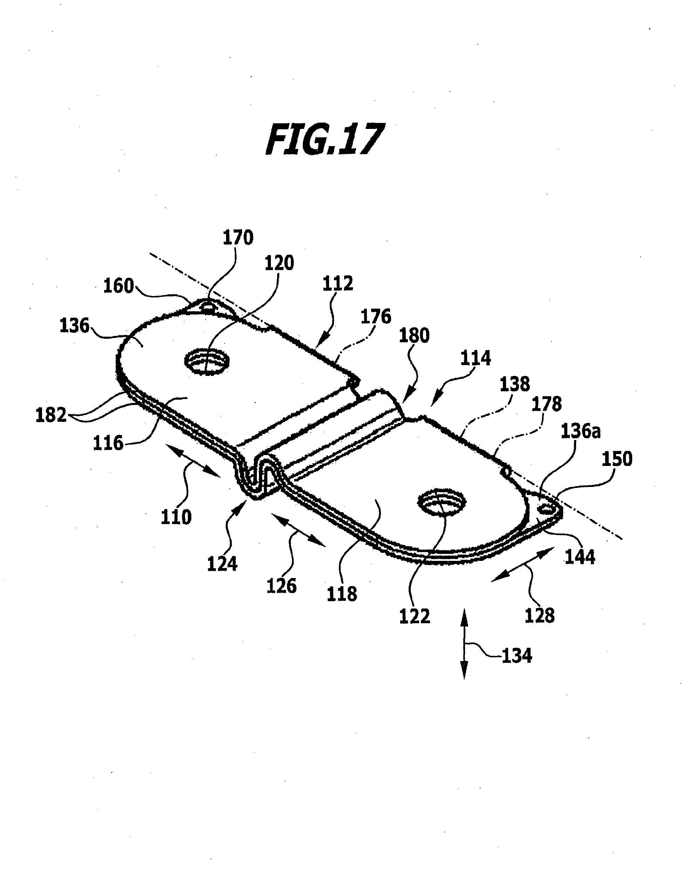

Eine in den Fig. 17 bis 23 dargestellte dritte Ausführungsform eines Zellverbinders 112 unterscheidet sich von den beiden ersten, in den Fig. 1 bis 16 dargestellten Ausführungsformen dadurch, dass die Faltlinie 138, längs welcher die erste Materiallage 136a und die zweite Materiallage 136b einstückig miteinander verbunden sind, nicht parallel zur Querrichtung 128 des Zellverbinders 112, sondern stattdessen im Wesentlichen parallel zur Längsrichtung 126 und damit im Wesentlichen parallel zur Verbindungsrichtung 110 des Zellverbinders 112 verläuft.

Fig. 17 zeigt eine perspektivische Darstellung des fertigen Zellverbinders 112 gemäß der dritten Ausführungsform.

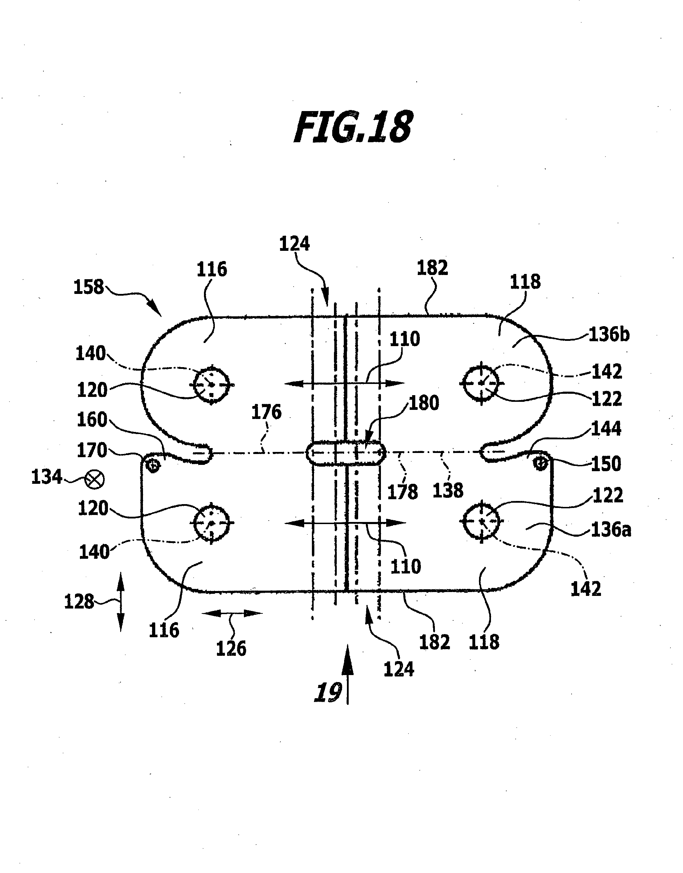

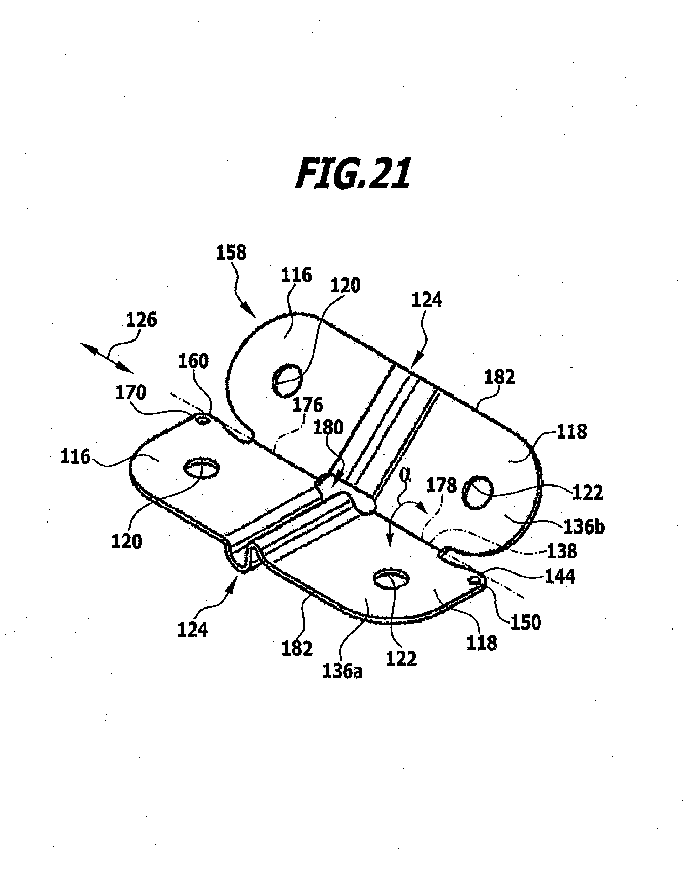

Die Fig. 18 bis 20 zeigen eine Grundkörper-Vorform 158, aus welcher der Grundkörper 114 gemäß Fig. 17 durch einen Umfaltvorgang herstellbar ist, von dem drei aufeinanderfolgende Phasen in den Fig. 21 bis 23 dargestellt sind.

Wie am Besten aus Fig. 18 zu ersehen ist, umfasst die Faltlinie 138 bei dieser Ausführungsform einen ersten Abschnitt 176, welcher zwischen dem ersten Kontaktbereich 116 der ersten Materiallage 136a und dem ersten Kontaktbereich 116 der zweiten Materiallage 136b verläuft, und einen zweiten Abschnitt 178, welcher zwischen dem zweiten Kontaktbereich 118 der ersten Materiallage 136a und dem zweiten Kontaktbereich 118 der zweiten Materiallage 136b verläuft.

Die beiden Abschnitte 176 und 178 der Faltlinie 138 sind bei dieser Ausführungsform durch eine dazwischenliegende Ausnehmung 180 voneinander getrennt.

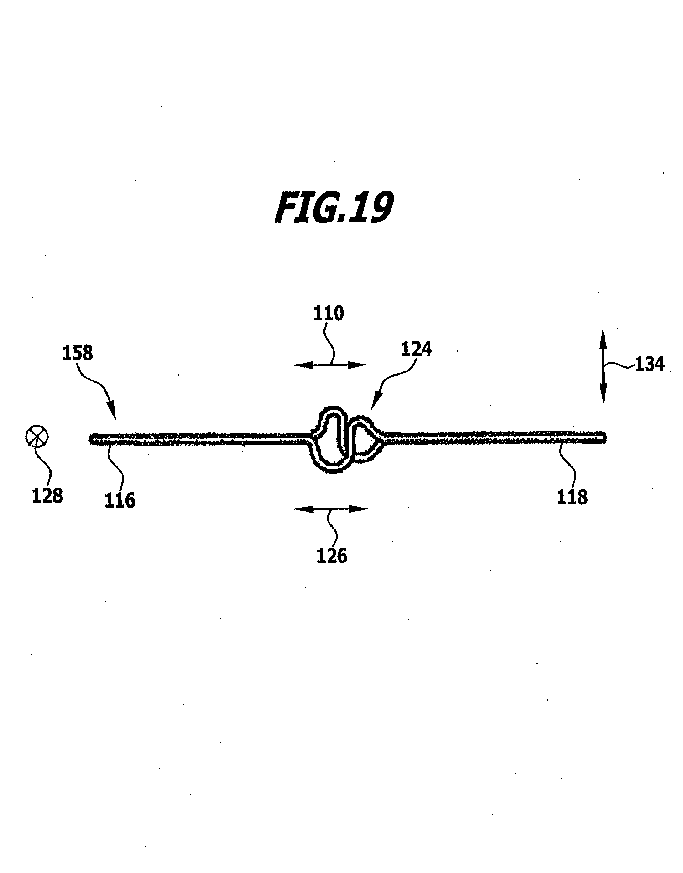

Die Ausnehmung 180 im Bereich des Kompensationsbereichs 124 des Zellverbinders 112 ermöglicht es, dass die nebeneinanderliegenden Kompensationsbereiche 124 der ersten Materiallage 136a und der zweiten Materiallage 136b komplementär zueinander ausgebildet werden (siehe insbesondere die Seitenansicht der Grundkörper-Vorform 158 in Fig. 19).

Bei der in den Fig. 17 bis 23 dargestellten dritten Ausführungsform weist der Kompensationsbereich 124 nicht mehrere, sondern jeweils nur einen Wellenberg 130 und nicht mehrere, sondern jeweils nur ein Wellental 132 auf. Grundsätzlich ist die Anzahl der Wellen im Kompensationsbereich 124 jedoch beliebig, sodass die in den Fig. 17 bis 23 dargestellte dritte Ausführungsform auch mit einer größeren Anzahl von Wellen und die in den Fig. 1 bis 16 dargestellten Ausführungsformen eines Zellverbinders 112 auch mit einer geringeren (oder einer noch größeren) Anzahl von Wellen im Kompensationsbereich 124 versehen sein können.

Ein weiterer Unterschied zwischen der in den Fig. 17 bis 23 dargestellten dritten Ausführungsform und den beiden in den Fig. 1 bis 16 dargestellten Ausführungsformen besteht darin, dass die Kontaktbereiche 116 und 118 bei der dritten Ausführungsform in ihren Eckbereichen größere Krümmungsradien aufweisen, so dass der Zellverbinder 112 insgesamt eine nährungsweise ovale Außenkontur erhält.

Grundsätzlich kann aber auch ein Kontaktbereich 116, 118 mit einem kleineren Krümmungsradius mit einer parallel zur Längsrichtung 126 verlaufenden Faltlinie 138 kombiniert werden, und ein Kontaktbereich mit einem größeren Krümmungsradius kann grundsätzlich auch mit einer parallel zur Querrichtung 128 des Zellverbinders 112 verlaufenden Faltlinie 138 kombiniert werden.

Schließlich sind die Spannungsabgriffe 144 und 160 des Zellverbinders 112 bei der in den Fig. 17 bis 23 dargestellten dritten Ausführungsform nicht stegförmig ausgebildet, sondern bilden über die Außenkontur der jeweils anderen Materiallage 136b überstehende Eckbereiche der Kontaktbereiche 116, 118 einer Materiallage 136a des Grundkörpers 114.

Vorzugsweise sind der erste Spannungsabgriff 144 und/oder der zweite Spannungsabgriff 160 an der ersten Materiallage 136a angeordnet, welche im montierten Zustand des Zellverbinders 112 den miteinander zu verbindenden Zellterminals 108 der elektrochemischen Zellen 102 zugewandt ist. Besonders günstig ist es, wenn beide Spannungsabgriffe 144 und 160 an derselben Materiallage, vorzugsweise an der ersten Materiallage 136a, vorgesehen sind.

Die Kontaktstellen 150 der Spannungsabgriffe 144 und 160 werden bei der Montage des Zellverbinders 112 über (nicht dargestellte) Leitungen an eine (nicht dargestellte) Auswerteeinheit der elektrochemischen Vorrichtung 100 angeschlossen, um die elektrischen Potentiale des ersten Kontaktbereichs 116 und des zweiten Kontaktbereichs 118 im Betrieb der elektrochemischen Vorrichtung 100 erfassen und auswerten zu können.

Zur Herstellung der dritten Ausführungsform eines Zellverbinders 112 wird zunächst aus einem Ausgangsmaterial, beispielsweise aus einem blechförmigen Ausgangsmaterial, die in den Fig. 18 bis 20 dargestellte Grundkörper-Vorform 158 herausgetrennt, beispielsweise ausgestanzt oder (zum Beispiel mittels eines Lasers) herausgeschnitten.

In der Grundkörper-Vorform 158 liegen die beiden Materiallagen 136a und 136b in derselben Ebene, längs der späteren Faltlinie 138, nebeneinander.

In die Materiallagen 136a, 136b der Grundkörper-Vorform 158 werden durch geeignete Umformvorgänge, insbesondere Präge- oder Tiefziehvorgänge, die Wellenberge 130 und Wellentäler 132 der jeweiligen Kompensationsbereiche 124 eingebracht.

Vor oder nach diesem Umformvorgang werden die Durchgangsöffnungen 120 und 122 in die Kontaktbereiche 116 bzw. 118 der Materiallagen 136a bzw. 136b der Grundkörper-Vorform 158 eingebracht.

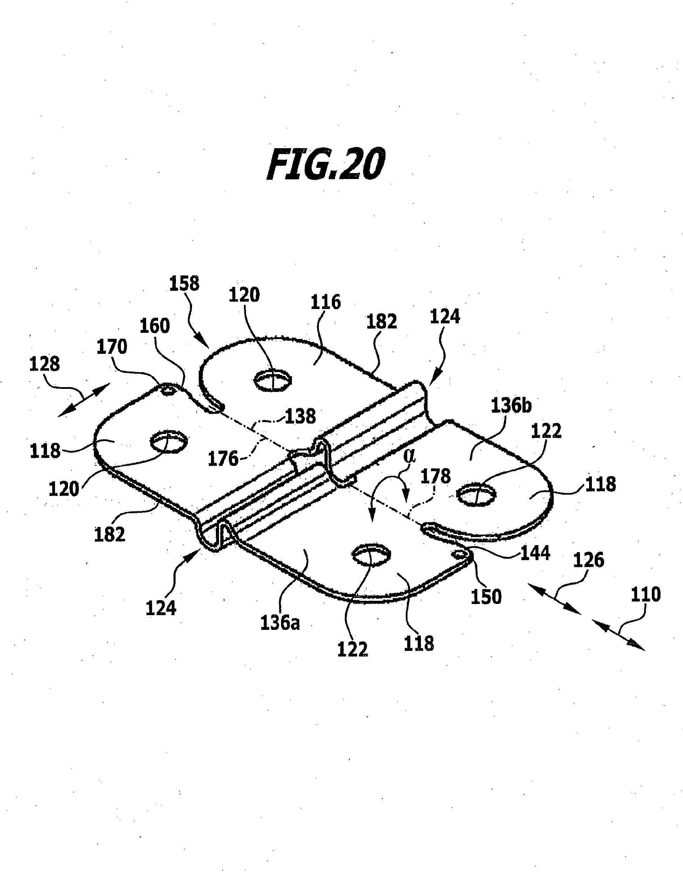

Anschließend wird der in Fig. 17 dargestellte Grundkörper 114 des Zellverbinders 112 aus der in Fig. 20 dargestellten Grundkörper-Vorform 158 durch einen Umfaltvorgang erzeugt, bei dem eine der Materiallagen, beispielsweise die zweite Materiallage 136b, um die Faltlinie 138 so gefaltet wird, dass sich der von den Materiallagen 136a und 136b eingeschlossene Winkel α von zunächst 180° bis auf 0° verringert und die beiden Materiallagen 136a, 136b schließlich im Wesentlichen flächig aneinander anliegen.

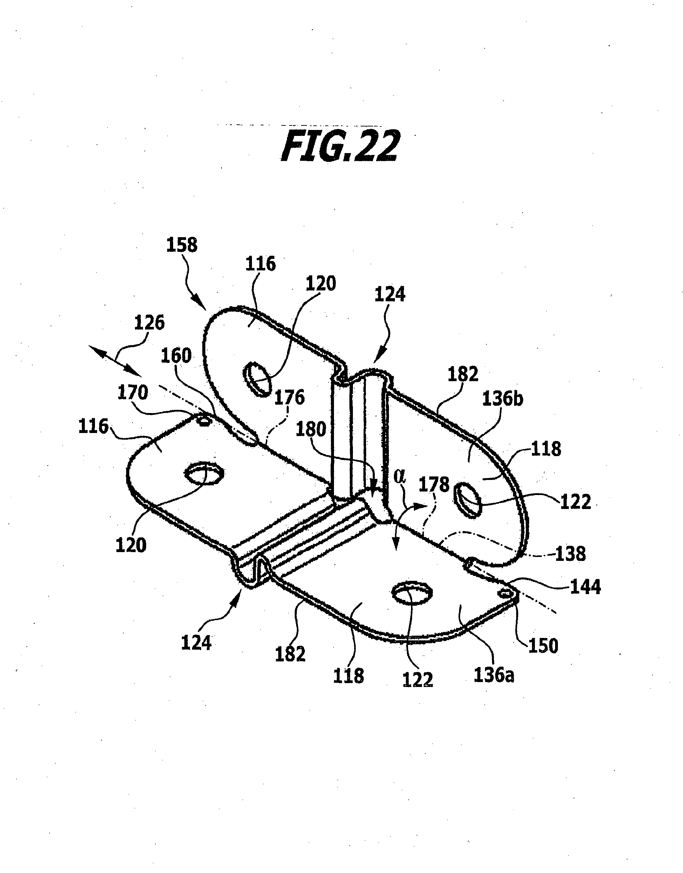

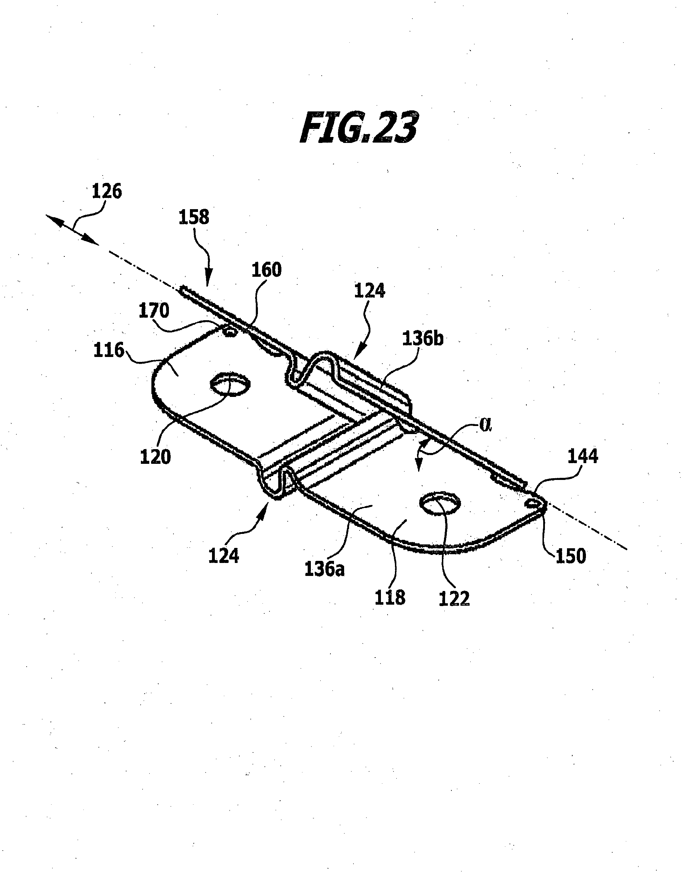

In den zeitlich aufeinanderfolgenden Phasen des Umfaltvorgangs, die in den Fig. 21 bis 23 dargestellt sind, beträgt der von den Materiallagen 136a, 136b eingeschlossene Winkel α jeweils 135° (Fig. 21), 90° (Fig. 22) bzw. 45° (Fig. 23).

Grundsätzlich ist es möglich, die beiden Materiallagen 136a und 136b nach dem Umfaltvorgang durch eine weitere Maßnahme, beispielsweise durch Verschweißung, zusätzlich zu der einstückigen Verbindung längs der Faltlinie 138 miteinander zu verbinden, um ein unbeabsichtigtes Wiederauffalten des Grundkörpers 114 zu vermeiden.

Da aufgrund des Verlaufs der Faltlinie 138 parallel zur Längsrichtung 126 des Zellverbinders 112 der Abstand der freien Ränder 182 der Materiallagen 136a, 136b von der Faltlinie 138 jedoch relativ gering ist, insbesondere kleiner ist als die gesamte Erstreckung der Faltlinie 138 in der Längsrichtung 126 des Zellverbinders 112, kann auf solche zusätzliche Maßnahmen zur Verbindung der beiden Materiallagen 136a, 136b miteinander jedoch verzichtet werden.

Vorzugsweise sind die Materiallagen 136a, 136b des Grundkörpers 114 des Zellverbinders 112 daher außer der einstückigen Verbindung längs der Faltlinie 138 durch keine weitere Maßnahme (also insbesondere weder stoffschlüssig noch kraftschlüssig ) miteinander verbunden.

Der fertiggestellte Grundkörper 114 gemäß Fig. 17 wird anschließend mit den Zellterminals 108 der miteinander zu verbindenden elektrochemischen Zellen 102, vorzugsweise stoffschlüssig, verbunden.

Im Übrigen stimmt die in den Fig. 17 bis 23 dargestellte dritte Ausführungsform eines Zellverbinders 112 hinsichtlich Aufbau, Funktion und Herstellungsweise mit den in den Fig. 1 bis 16 dargestellten Ausführungsformen überein, auf deren vorstehende Beschreibung insoweit Bezug genommen wird.

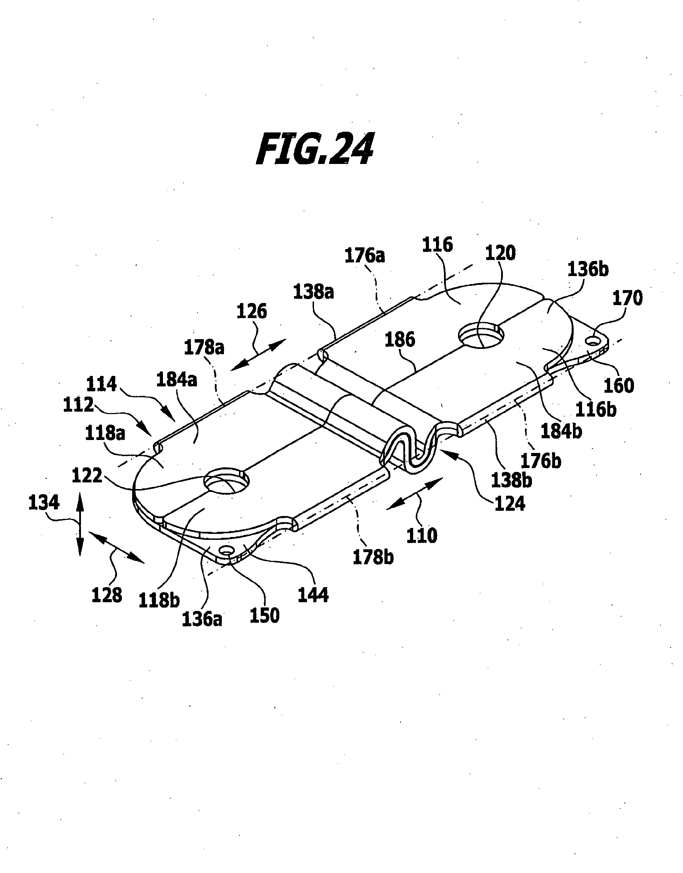

Eine in den Fig. 24 bis 31 dargestellte vierte Ausführungsform eines Zellverbinders 112 unterscheidet sich von der dritten, in den Fig. 17 bis 23 dargestellten Ausführungsform dadurch, dass die zweite Materiallage 136b nicht einteilig ausgebildet ist, sondern längs einer Trennungslinie 186 in zwei Teil-Materiallagen 184a und 184b unterteilt ist, welche jeweils längs voneinander verschiedener Faltlinien 138a bzw. 138b einstückig mit der ersten Materiallage 136a des Grundkörpers 114 verbunden sind.

Dabei verlaufen die Trennungslinie 186 und die beiden Faltlinien 138a und 138b vorzugsweise im Wesentlichen parallel zur Längsrichtung 126 und damit im Wesentlichen parallel zur Verbindungsrichtung 110 des Zellverbinders 112.

Fig. 24 zeigt eine perspektivische Darstellung des fertigen Zellverbinders 112 gemäß der vierten Ausführungsform.

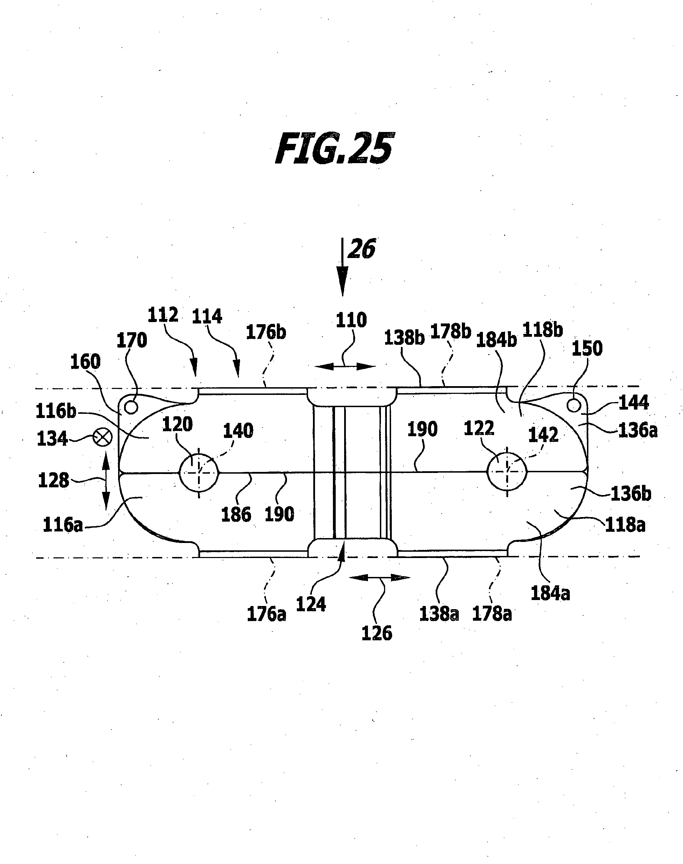

Fig. 25 zeigt eine Draufsicht von oben auf den fertigen Zellverbinder 112 gemäß der vierten Ausführungsform.

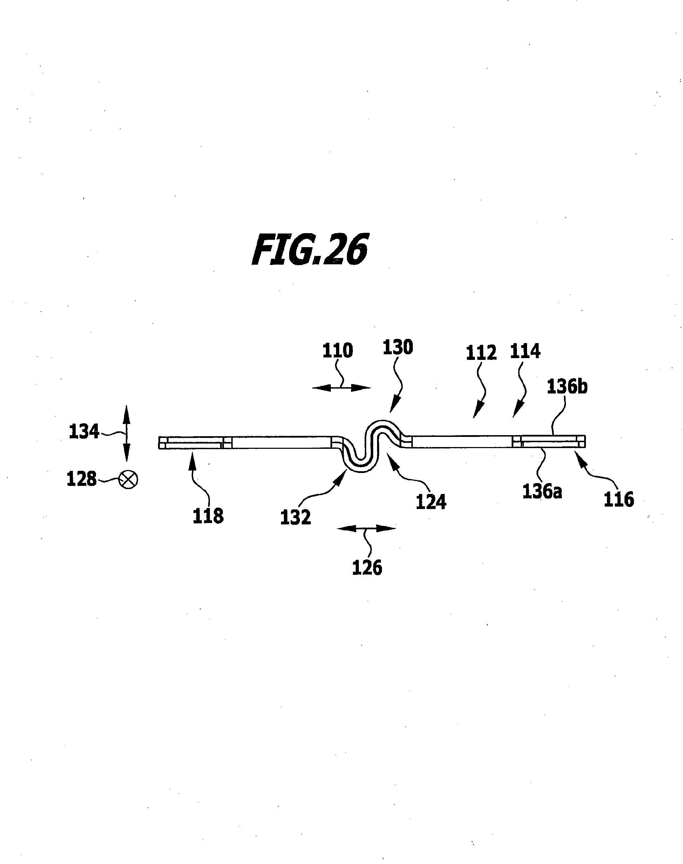

Fig. 26 zeigt eine Seitenansicht des fertigen Zellverbinders 112 gemäß der vierten Ausführungsform.

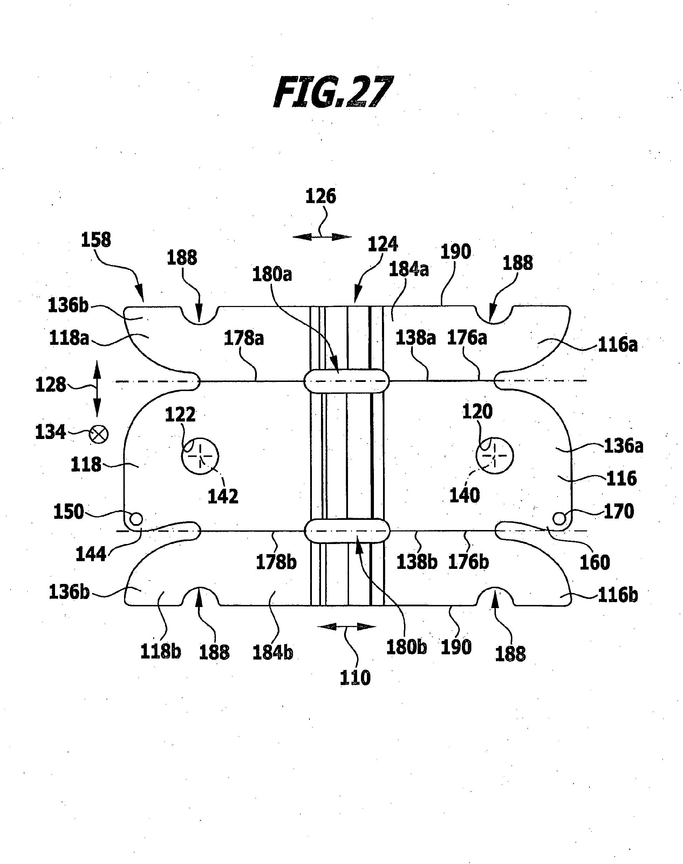

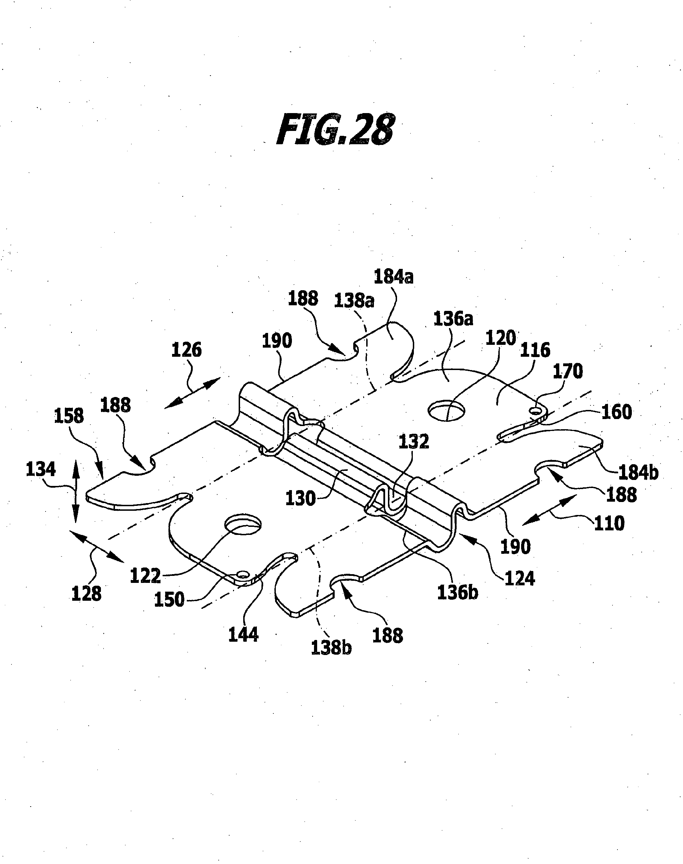

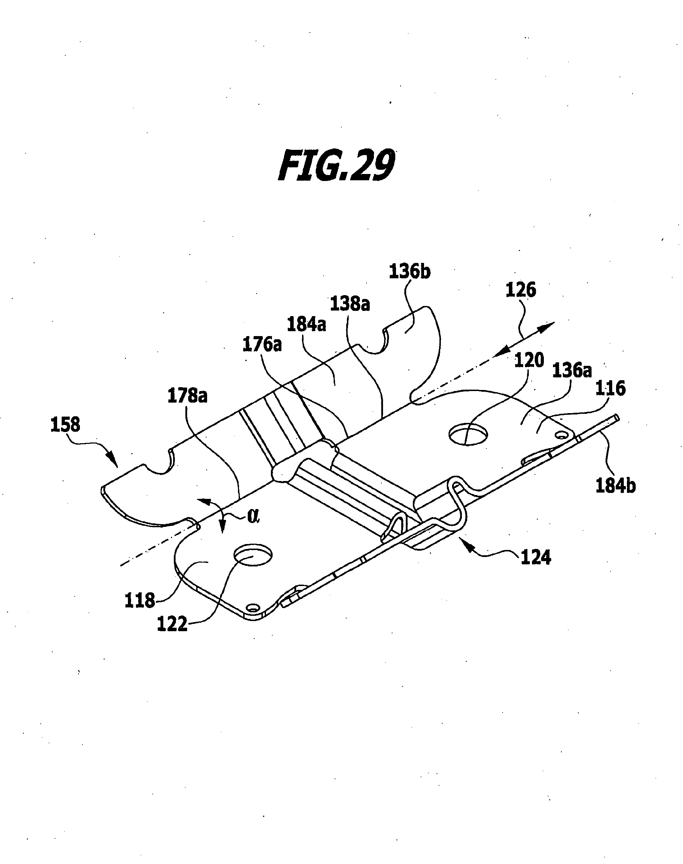

Die Fig. 27 und 28 zeigen eine Grundkörper-Vorform 158, aus welcher der Grundkörper 114 gemäß den Fig. 24 bis 26 durch einen Umfaltvorgang herstellbar ist, von dem drei aufeinanderfolgende Phasen in den Fig. 29 bis 31 dargestellt sind.

Wie am Besten aus Fig. 27 zu ersehen ist, umfasst die erste Faltlinie 138a bei dieser Ausführungsform einen ersten Abschnitt 176a, welcher zwischen dem ersten Kontaktbereich 116 der ersten Materiallage 136a und einem ersten Teil-Kontaktbereich 116a der ersten Teil-Materiallage 184a der zweiten Materiallage 136b verläuft, und einen zweiten Abschnitt 178a, welcher zwischen dem zweiten Kontaktbereich 118 der ersten Materiallage 136a und einem zweiten Teil-Kontaktbereich 118a der ersten Teil-Materiallage 184a der zweiten Materiallage 136b verläuft.

Die beiden Abschnitte 176a und 178a der ersten Faltlinie 138a sind bei dieser Ausführungsform durch eine dazwischenliegende Ausnehmung 180a voneinander getrennt.

Die Ausnehmung 180a im Bereich des Kompensationsbereichs 124 des Zellverbinders 112 ermöglicht es, dass die nebeneinander liegenden Kompensationsbereiche 124 der ersten Materiallage 136a und der ersten Teil-Materiallage 184a der zweiten Materiallage 136b komplementär zueinander ausgebildet werden.

Bei der in den Fig. 24 bis 31 dargestellten vierten Ausführungsform weist der Kompensationsbereich 124 nicht mehrere, sondern jeweils nur einen Wellenberg 130 und nicht mehrere, sondern jeweils nur ein Wellental 132 auf.

Grundsätzlich ist die Anzahl der Wellenkompensationsbereiche Wellen der Kompensationsbereiche 124 jedoch beliebig, so dass die in den Fig. 24 bis 31 dargestellte vierte Ausführungsform auch mit einer größeren Anzahl von Wellen versehen sein kann.

Die zweite Faltlinie 138b umfasst bei dieser Ausführungsform einen ersten Abschnitt 176b, welcher zwischen dem ersten Kontaktbereich 116 der ersten Materiallage 136a und einem ersten Teil-Kontaktbereich 116b der zweiten Teil-Materiallage 184b der zweiten Materiallage 136b verläuft, und einen zweiten Abschnitt 178b, welcher zwischen dem zweiten Kontaktbereich 118 der ersten Materiallage 136a und einem zweiten Teil-Kontaktbereich 118b der zweiten Teil-Materiallage 184b der zweiten Materiallage 136b verläuft.

Die beiden Abschnitte 176b und 178b der zweiten Faltlinie 138b sind bei dieser Ausführungsform durch eine dazwischenliegende Ausnehmung 180b voneinander getrennt.

Die Ausnehmung 180b im Bereich des Kompensationsbereichs 124 des Zellverbinders 112 ermöglicht es, dass die nebeneinanderliegenden Kompensationsbereiche 124 der ersten Materiallage 136a und der zweiten Teil-Materiallage 184b der zweiten Materiallage 136b komplementär zueinander ausgebildet werden.

Da bei dieser vierten Ausführungsform des Zellverbinders 112 die Trennungslinie 186 der zweiten Materiallage 136b durch das Zentrum 140 des ersten Kontaktbereichs 116 und das Zentrum 142 des zweiten Kontaktbereichs 118 der zweiten Materiallage 136b verläuft, bilden die erste Durchgangsöffnung 120 des ersten Kontaktbereichs 116 und die zweite Durchgangsöffnung 122 des zweiten Kontaktbereichs 118 der zweiten Materiallage 136b in der Grundkörper-Vorform 158 keine Löcher mit geschlossenem Rand, sondern, beispielsweise im Wesentlichen halbkreisförmige, Ausnehmungen 188 an den freien Rändern 190 der beiden Teil-Materiallagen 184a, 184b, welche der jeweiligen Faltlinie 138a bzw. 138b gegenüberliegen.

Zur Herstellung der vierten Ausführungsform eines Zellverbinders 112 wird zunächst aus einem Ausgangsmaterial, beispielsweise aus einem blechförmigen Ausgangsmaterial, die in den Fig. 27 und 28 dargestellte Grundkörper-Vorform 158 herausgetrennt, beispielsweise ausgestanzt oder (zum Beispiel mittels eines Lasers) herausgeschnitten.

In der Grundkörper-Vorform 158 liegen die erste Materiallage 136a und die beiden Teil-Materiallagen 184a, 184b der zweiten Materiallage 136b in derselben Ebene, längs der späteren Faltlinien 138a und 138b, nebeneinander.

In die Materiallage 136a und die Teil-Materiallagen 184a, 184b der Grundkörper-Vorform 158 werden durch geeignete Umformvorgänge, insbesondere Präge- oder Tiefziehvorgänge, die Wellenberge 130 und Wellentäler 132 der jeweiligen Kompensationsbereiche 124 eingebracht.

Vor oder nach diesem Umformvorgang werden die Durchgangsöffnungen 120 und 122 in die Kontaktbereiche 116 bzw. 118 der Materiallage 136a der Grundkörper-Vorform 158 eingebracht.

Anschließend wird der in den Fig. 24 bis 26 dargestellte Grundkörper 114 des Zellverbinders 112 aus der in den Fig. 27 und 28 dargestellten Grundkörper-Vorform 158 durch einen Umfaltvorgang erzeugt, bei dem die beiden Teil-Materiallagen 184a, 184b der zweiten Materiallage 136b um die jeweils zugeordnete Faltlinie 138a bzw. 138b so gefaltet werden, dass sich der von der Materiallage 136a einerseits und den Teil-Materiallagen 184a, 184b andererseits eingeschlossene Winkel α von zunächst 180° bis auf 0° verringert und die erste Materiallage 136a und die beiden Teil-Materiallagen 184a, 184b der zweiten Materiallage 136b schließlich im Wesentlichen flächig aneinander anliegen.

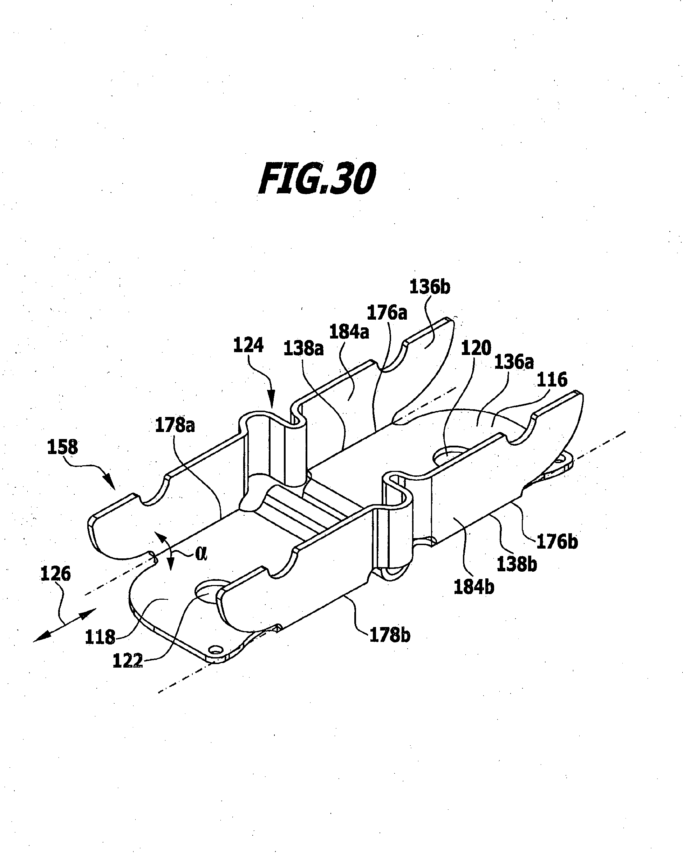

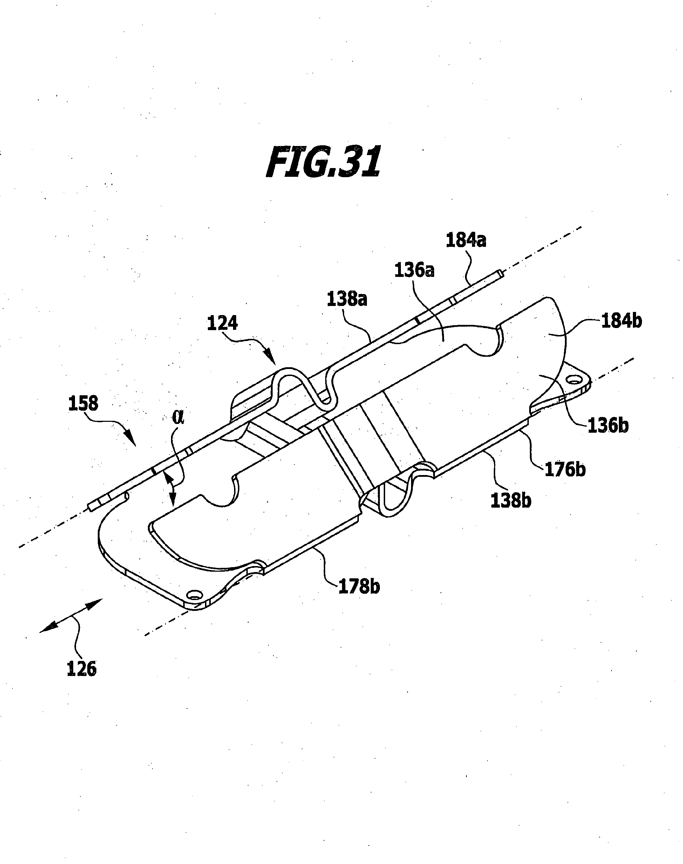

In den zeitlich aufeinanderfolgenden Phasen des Umfaltvorgangs, die in den Fig. 29 bis 31 dargestellt sind, beträgt der von der ersten Materiallage 136a einerseits und den Teil-Materiallagen 184a bzw. 184b andererseits eingeschlossene Winkel α jeweils 135° (Fig. 29), 90° (Fig. 30) bzw. 45° (Fig. 31).

Im fertiggestellten Grundkörper 114 des Zellverbinders 112 (siehe die Fig. 24 bis 26) liegen die freien Ränder 190 der Teil-Materiallagen 184a, 184b der zweiten Materiallage 136 längs der Trennungslinie 186 aneinander an. oder einander mit geringem Abstand gegenüber.

Grundsätzlich ist es möglich, die Materiallage 136a und die Teil-Materiallagen 184a, 184b nach dem Umfaltvorgang durch eine weitere Maßnahmen, beispielsweise durch Verschweißung und/oder durch mechanische Verklemmung, zusätzlich zu der einstückigen Verbindung längs der Faltlinien 138a, 138b miteinander zu verbinden, um ein unbeabsichtigtes Wiederauffalten des Grundkörpers 114 zu vermeiden.

Da aufgrund des Verlaufs der Faltlinien 138a und 138b parallel zur Längsrichtung 126 des Zellverbinders 112 der Abstand der freien Ränder 190 der Teil-Materiallagen 184a und 184b von der jeweiligen Faltlinie 138a bzw. 138b jedoch relativ gering ist, insbesondere kleiner ist als die gesamte Erstreckung der Faltlinien 138a und 138b in der Längsrichtung 126 des Zellverbinders 112, kann auf solche zusätzliche Maßnahmen zur Verbindung der Materiallage 136a mit den Teil-Materiallagen 184a und 184b miteinander jedoch verzichtet werden.

Vorzugsweise sind die Materiallage 136a und die Teil-Materiallagen 184a, 184b des Grundkörpers 114 des Zellverbinders 112 daher außer der einstückigen Verbindung längs der Faltlinien 138a und 138b durch keine weitere Maßnahme (also insbesondere weder stoffschlüssig noch kraftschlüssig) miteinander verbunden.

Der fertiggestellte Grundkörper 114 gemäß den Fig. 24 bis 26 wird anschließend mit den Zellterminals 108 der miteinander zu verbindenden elektrochemischen Zellen 102, vorzugsweise stoffschlüssig, verbunden.

Im Übrigen stimmt die in den Fig. 24 bis 31 dargestellte vierte Ausführungsform eines Zellverbinders 112 hinsichtlich Aufbau, Funktion und Herstellungsweise mit der in den Fig. 17 bis 23 dargestellten dritten Ausführungsform überein, auf deren vorstehende Beschreibung insoweit Bezug genommen wird.

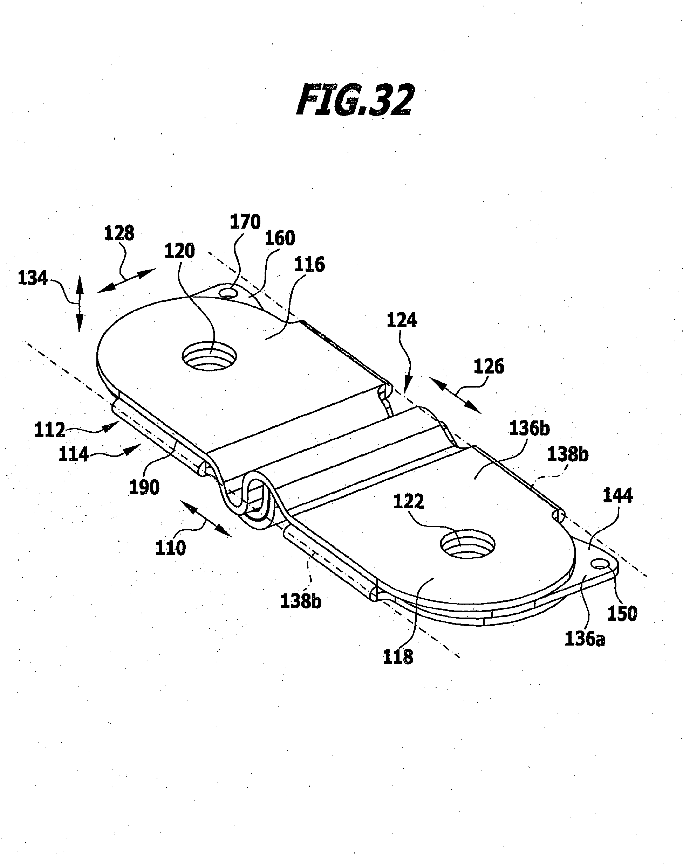

Eine in den Fig. 32 bis 39 dargstellte fünfte Ausführungsform eines Zellverbinders 112 unterscheidet sich von der dritten, in den Fig. 17 bis 23 dargestellten Ausführungsform dadurch, dass die erste Materiallage 136a nicht nur mit der zweiten Materiallage 136b längs einer Faltlinie einstückig verbunden ist, sondern längs einer ersten Faltlinie 138a einstückig mit der zweiten Materiallage 136b und längs einer zweiten Faltlinie 138b einstückig mit einer dritten Materiallage 136c des Grundkörpers 114 verbunden ist.

Dabei verlaufen die beiden Faltlinien 138a und 138b vorzugsweise im Wesentlichen parallel zur Längsrichtung 126 und damit im Wesentlichen parallel zur Verbindungsrichtung 110 des Zellverbinders 112.

Fig. 32 zeigt eine perspektivische Darstellung des fertigen Zellverbinders 112 gemäß der fünften Ausführungsform, welche somit drei Materiallagen 136a, 136b und 136c umfasst.

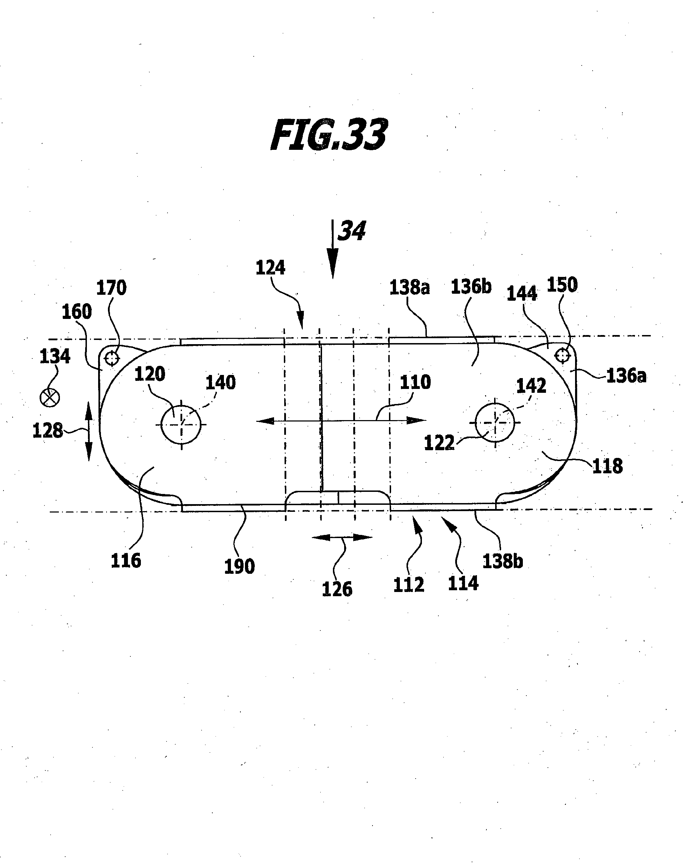

Fig. 33 zeigt eine Draufsicht von oben auf den fertigen Zellverbinder 112 gemäß der fünften Ausführungsform.

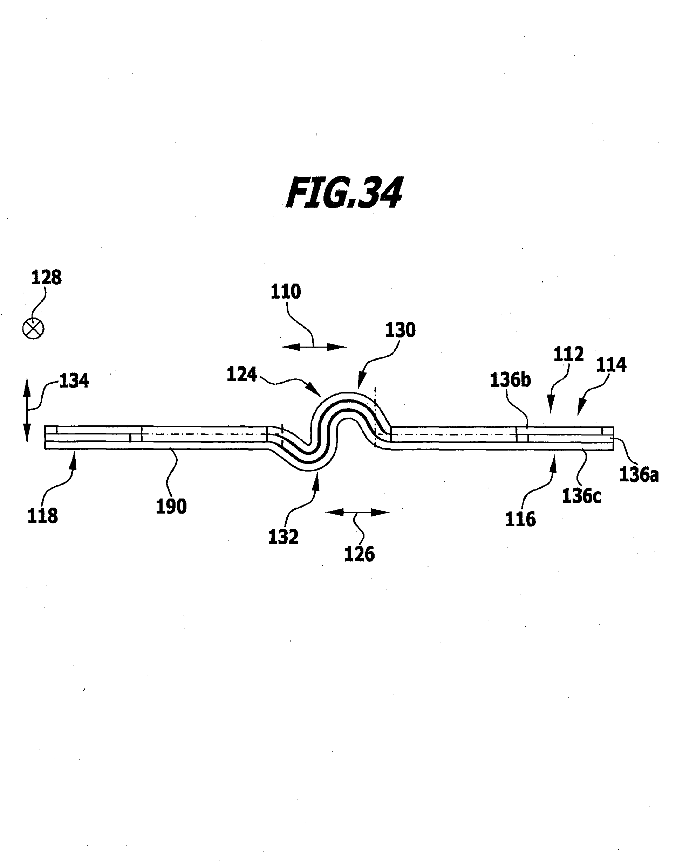

Fig. 34 zeigt eine Seitenansicht des fertigen Zellverbinders 112 gemäß der fünften Ausführungsform.

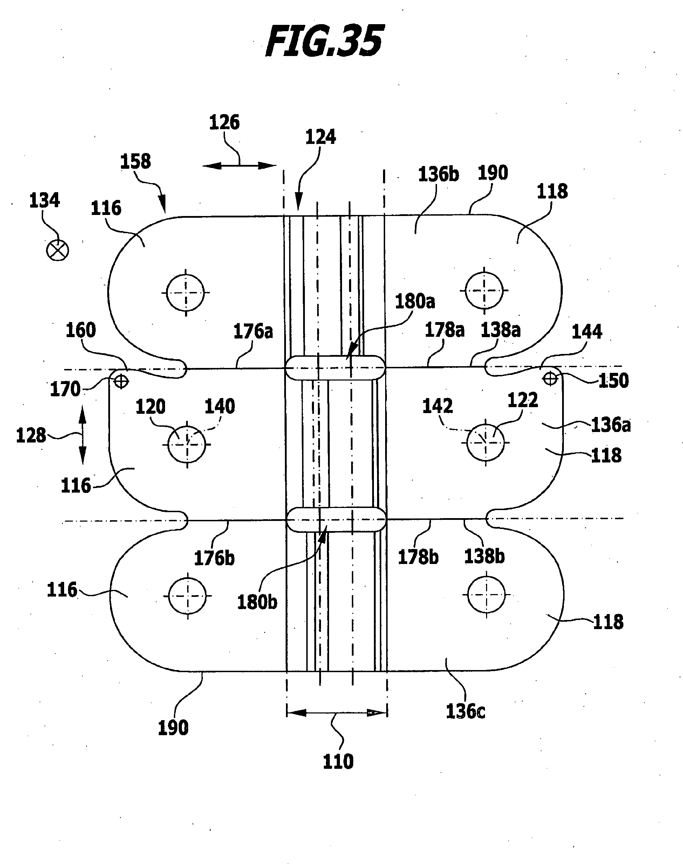

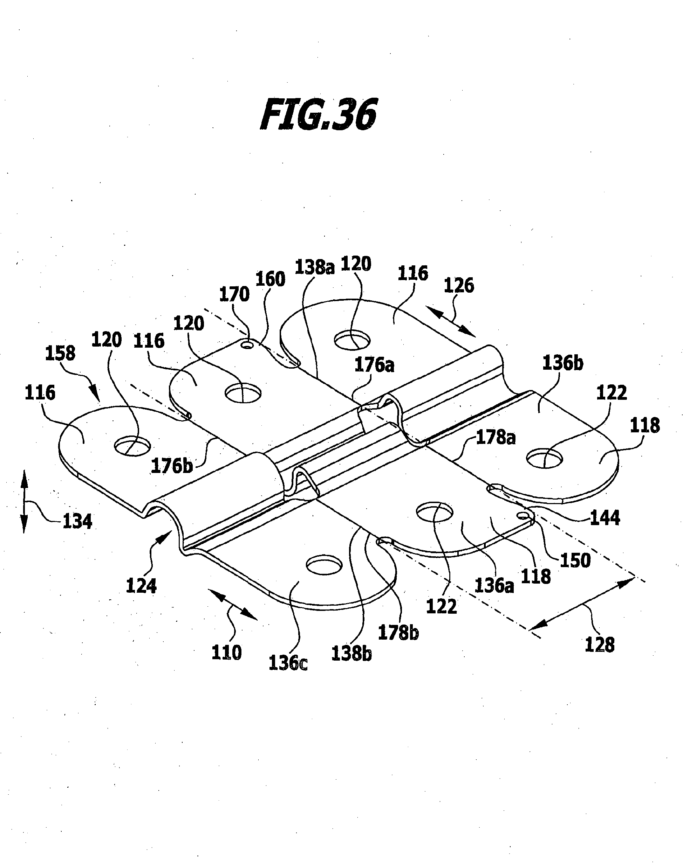

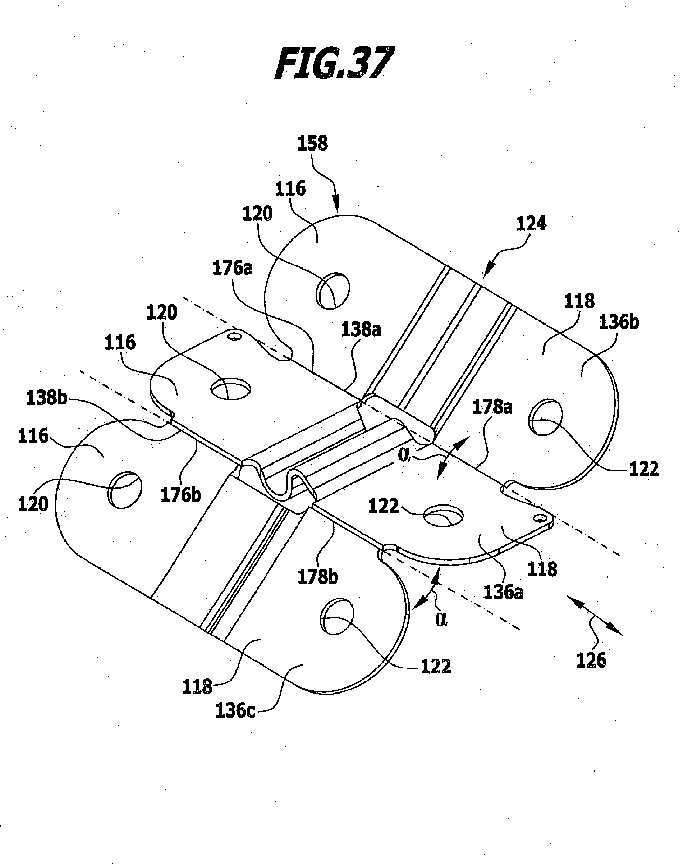

Die Fig. 35 und 36 zeigen eine Grundkörper-Vorform 158, aus welcher der Grundkörper 114 gemäß den Fig. 32 bis 34 durch einen Umfaltvorgang herstellbar ist, von dem drei aufeinanderfolgende Phasen in den Fig. 37 bis 39 dargestellt sind.

Wie am Besten aus Fig. 35 zu ersehen ist, umfasst die erste Faltlinie 138a bei dieser Ausführungsform einen ersten Abschnitt 176a, welcher zwischen dem ersten Kontaktbereich 116 der ersten Materiallage 136a und dem ersten Kontaktbereich 116 der zweiten Materiallage 136b verläuft, und einen zweiten Abschnitt 178a, welcher zwischen dem zweiten Kontaktbereich 118 der ersten Materiallage 136a und dem zweiten Kontaktbereich 118 der zweiten Materiallage 136b verläuft.

Die beiden Abschnitte 176a und 178a der ersten Faltlinie 138a sind bei dieser Ausführungsform durch eine dazwischenliegende Ausnehmung 180a voneinander getrennt.

Die Ausnehmung 180a im Bereich des Kompensationsbereichs 124 des Zellverbinders 112 ermöglicht es, dass die nebeneinanderliegenden Kompensationsbereiche 124 der ersten Materiallage 136a und der zweiten Materiallage 136b komplementär zueinander ausgebildet werden.

Bei der in den Fig. 32 bis 39 dargestellten fünften Ausführungsform weist der Kompensationsbereich 124 nicht mehrere, sondern jeweils nur einen Wellenberg 130 und nicht mehrere, sondern jeweils nur ein Wellental 132 auf.

Grundsätzlich ist die Anzahl der Wellen der Kompensationsbereiche 124 jedoch beliebig, so dass die in den Fig. 32 bis 39 dargestellte fünfte Ausführungsform auch mit einer größeren Anzahl von Wellen versehen sein kann.

Die zweite Faltlinie 138b umfasst bei dieser Ausführungsform einen ersten Abschnitt 176b, welcher zwischen dem ersten Kontaktbereich 116 der ersten Materiallage 136a und dem ersten Kontaktbereich 116 der dritten Materiallage 136c verläuft, und einen zweiten Abschnitt 178b, welcher zwischen dem zweiten Kontaktbereich 118 der ersten Materiallage 136a und dem zweiten Kontaktbereich 118 der dritten Materiallage 136c verläuft.

Die beiden Abschnitte 176b und 178b der zweiten Faltlinie 138b sind bei dieser Ausführungsform durch eine dazwischenliegende Ausnehmung 180b voneinander getrennt.

Die Ausnehmung 180b im Bereich des Kompensationsbereichs 124 des Zellverbinders 112 ermöglicht es, dass die nebeneinanderliegenden Kompensationsbereiche 124 der ersten Materiallage 136a und der dritten Materiallage 136c komplementär zueinander ausgebildet werden.

Zur Herstellung der fünften Ausführungsform eines Zellverbinders 112 wird zunächst aus einem Ausgangsmaterial, beispielsweise aus einem blechförmigen Ausgangsmaterial, die in den Fig. 35 und 36 dargestellte Grundkörper-Vorform 158 herausgetrennt, beispielsweise ausgestanzt oder (zum Beispiel mittels eines Lasers) herausgeschnitten.

In der Grundkörper-Vorform 158 liegen die erste Materiallage 136a, die zweite Materiallage 136b und die dritte Materiallage 136c in derselben Ebene, längs der späteren Faltlinien 138a und 138b, nebeneinander.

In die Materiallagen 136a, 136b und 136c der Grundkörper-Vorform 158 werden durch geeignete Umformvorgänge, insbesondere Präge- oder Tiefziehvorgänge, die Wellenberge 130 und Wellentäler 132 der jeweiligen Kompensationsbereiche 124 eingebracht.

Vor oder nach diesem Umformvorgang werden die Durchgangsöffnungen 120 und 122 in die Kontaktbereiche 116 bzw. 118 der Materiallagen 136a, 136b und 136c der Grundkörper-Vorform 158 eingebracht.

Anschließend wird der in den Fig. 32 bis 34 dargestellte Grundkörper 114 des Zellverbinders 112 aus der in den Fig. 35 und 36 dargestellten Grundkörper-Vorform 158 durch einen Umfaltvorgang erzeugt, bei dem die zweite Materiallage 136b und die dritte Materiallage 136c um die jeweils zugeordnete Faltlinie 138a bzw. 138b so gefaltet werden, dass sich der von der Materiallage 136a einerseits und den Materiallagen 136b bzw. 136c andererseits eingeschlossene Winkel α von zunächst 180° bis auf 0° verringert und die erste Materiallage 136a und die zweite Materiallage 136b bzw. die dritte Materiallage 136c schließlich im Wesentlichen flächig aneinander anliegen.

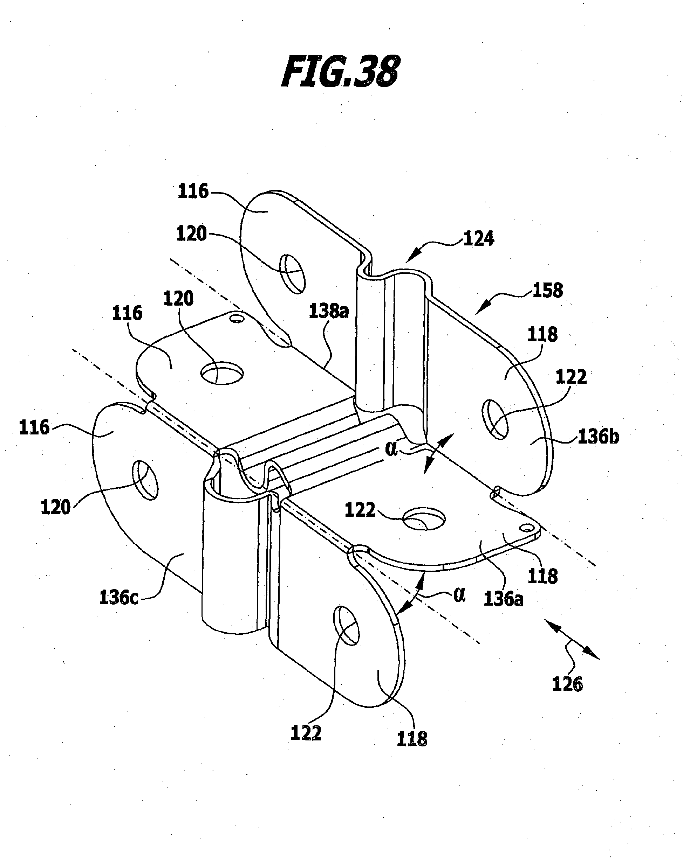

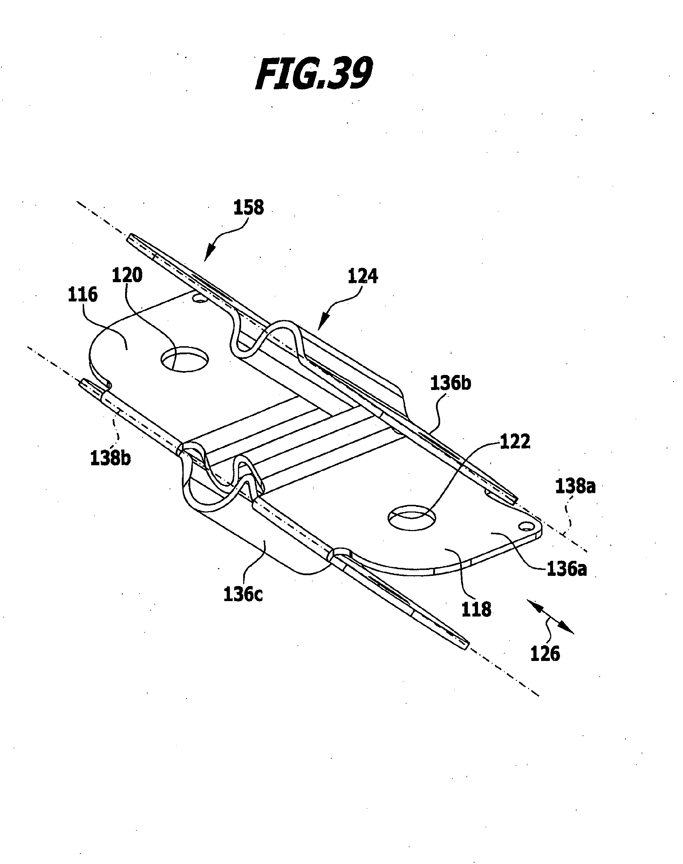

In den zeitlich aufeinanderfolgenden Phasen des Umfaltvorgangs, die in den Fig. 37 bis 39 dargestellt sind, beträgt der von der ersten Materiallage 136a einerseits und der zweiten Materiallage 136b bzw. der dritten Materiallage 136c andererseits eingeschlossene Winkel α jeweils 135° (Fig. 37), 90° (Fig. 38) bzw. 45° (Fig. 39).

Grundsätzlich ist es möglich, die Materiallage 136a einerseits und die Materiallagen 136b und 136c andererseits nach dem Umfaltvorgang durch eine weitere Maßnahme, beispielsweise durch Verschweißung, zusätzlich zu der einstückigen Verbindung längs der Faltlinie 138a, 138b miteinander zu verbinden, um ein unbeabsichtigtes Wiederauffalten des Grundkörpers 114 zu vermeiden.

Da aufgrund des Verlaufs der Faltlinien 138a und 138b parallel zur Längsrichtung 126 des Zellverbinders 112 der Abstand der freien Ränder 190 der Materiallagen 136b und 136c von der jeweiligen Faltlinie 138a bzw. 138b jedoch relativ gering ist, insbesondere kleiner ist als die gesamte Erstreckung der Faltlinien 138a und 138b in der Längsrichtung 126 des Zellverbinders 112, kann auf solche zusätzlichen Maßnahmen zur Verbindung der Materiallage 136a mit den beiden anderen Materiallagen 136b und 136c jedoch verzichtet werden.

Vorzugsweise sind die Materiallage 136a und die Materiallagen 136b und 136c des Grundkörpers 114 des Zellverbinders 112 daher außer der einstückigen Verbindung längs der Faltlinien 138a und 138b durch keine weitere Maßnahme (also insbesondere weder stoffschlüssig noch kraftschlüssig) miteinander verbunden.

Der fertiggestellte Grundkörper 114 gemäß den Fig. 32 bis 34 wird anschließend mit den Zellterminals 108 der miteinander zu verbindenden elektrochemischen Zellen 102, vorzugsweise stoffschlüssig, verbunden.

Im Übrigen stimmt die in den Fig. 32 bis 39 dargestellte fünfte Ausführungsform eines Zellverbinders 112 hinsichtlich Aufbau, Funktion und Herstellungsweise mit der in den Fig. 17 bis 23 dargestellten dritten Ausführungsform überein, auf deren vorstehende Beschreibung insoweit Bezug genommen wird.

## Patentansprüche

1. Zellverbinder zum elektrisch leitfähigen Verbinden eines ersten Zellterminals (108a) einer ersten elektrochemischen Zelle (102a) und eines zweiten Zellterminals (108b) einer zweiten elektrochemischen Zelle (102b) einer elektrochemischen Vorrichtung (100), wobei der Zellverbinder (112) einen ersten Kontaktbereich (116) zum Verbinden mit dem ersten Zellterminal (108a) und einen zweiten Kontaktbereich (118) zum Verbinden mit dem zweiten Zellterminal (108b) umfasst,
wobei der Zellverbinder (112) einen Grundkörper (114) aus zwei oder mehr Materiallagen (136a, 136b) umfasst, wobei mindestens zwei Materiallagen (136a, 136b) längs einer Faltlinie (138) einstückig miteinander verbunden sind,
wobei mindestens zwei Materiallagen (136a, 136b) im Wesentlichen flächig aneinander anliegen,
wobei der Grundkörper (114) des Zellverbinders (112) einen elastisch und/oder plastisch-verformbaren Kompensationsbereich (124), der den ersten Kontaktbereich (116) und den zweiten Kontaktbereich (118) miteinander verbindet und eine Bewegung dieser Kontaktbereiche (116, 118) relativ zueinander ermöglicht, umfasst, und
wobei der Kompensationsbereich (124) eine Wellenstruktur aufweist, die eine oder mehrere Wellen mit einer parallel zu einer Axialrichtung (104) der durch den Zellverbinder (112) miteinander zu verbindenden elektrochemischen Zellen (102a, 102b) gerichteten Amplitude umfasst,
**dadurch, gekennzeichnet,**
**dass** der Kompensationsbereich (124) in zwei oder mehr aufeinanderliegenden Materiallagen (136a, 136b) ausgebildet ist.

2. Zellverbinder nach Anspruch 1, **dadurch gekennzeichnet, dass** mindestens eine Faltlinie (138) zumindest abschnittsweise quer zu einer Verbindungsrichtung (110), welche ein Zentrum des ersten Kontaktbereichs (116) und ein Zentrum des zweiten Kontaktbereichs (118) miteinander verbindet, verläuft.

3. Zellverbinder nach Anspruch 2, **dadurch gekennzeichnet, dass** mindestens eine Faltlinie (138) im Wesentlichen senkrecht zu der Verbindungsrichtung (110) verläuft.

4. Zellverbinder nach einem der Ansprüche 1 bis 3, **dadurch gekennzeichnet, dass** zumindest ein Abschnitt von mindestens einer Faltlinie (138) längs eines seitlichen Randes des ersten Kontaktbereichs (116) oder des zweiten Kontaktbereichs (118) verläuft.

5. Zellverbinder nach einem der Ansprüche 1 bis 4, **dadurch gekennzeichnet, dass** mindestens eine Faltlinie (138) zumindest abschnittsweise im Wesentlichen parallel zu einer Verbindungsrichtung (110), welche ein Zentrum des ersten Kontaktbereichs (116) und ein Zentrum des zweiten Kontaktbereichs 118) miteinander verbindet, verläuft.

6. Zellverbinder nach einem der Ansprüche 1 bis 5, **dadurch gekennzeichnet, dass** mindestens eine Faltlinie (138) in einem ersten Abschnitt (176) längs eines seitlichen Randes des ersten Kontaktbereichs (116) und in einem zweiten Abschnitt (178) längs eines seitlichen Randes des zweiten Kontaktbereichs (118) verläuft.

7. Zellverbinder nach Anspruch 6, **dadurch gekennzeichnet, dass** die Faltlinie (138) zwischen dem ersten Abschnitt (176) und dem zweiten Abschnitt (178) durch eine Ausnehmung (180) unterbrochen ist.

8. Zellverbinder nach einem der Ansprüche 1 bis 7, **dadurch gekennzeichnet, dass** mindestens eine der Materiallagen (136b) des Grundkörpers (114) mindestens zwei Teil-Materiallagen (184a, 184b) umfasst, die längs voneinander verschiedener Faltlinien (138a, 138b) einstückig mit einer anderen Materiallage (136a) verbunden sind.

9. Zellverbinder nach einem der Ansprüche 1 bis 8, **dadurch gekennzeichnet, dass** mindestens eine der Materiallagen (136a) des Grundkörpers (114) längs voneinander verschiedener Faltlinien (138a, 138b) einstückig mit zwei anderen Materiallagen (136b, 136c) verbunden ist.

10. Zellverbinder nach einem der Ansprüche 1 bis 9, **dadurch gekennzeichnet, dass** der Kompensationsbereich (124) des Zellverbinders (112) mindestens eine quer zu einer Verbindungsrichtüng (110), welche ein Zentrum des ersten Kontaktbereichs (116) und ein Zentrum des zweiten Kontaktbereichs (118) miteinander verbindet, verlaufende Kompensationswelle, Kompensationssicke oder Kompensationsknicklinie aufweist.

11. Zellverbinder nach einem der Ansprüche 1 bis 10, **dadurch gekennzeichnet, dass** der Grundkörper (114) des Zellverbinders (112) mindestens einen Spannungsabgriff (144, 160) umfasst.

12. Zellverbinder nach Anspruch 11, **dadurch gekennzeichnet, dass** mindestens ein Spannungsabgriff (144, 160) stegförmig ausgebildet ist.

13. Zellverbinder nach einem der Ansprüche 11 oder 12, **dadurch gekennzeichnet, dass** der Grundkörper (114) des Zellverbinders (112) mindestens zwei Spannungsabgriffe (144, 160) umfasst, wobei ein Spannungsabgriff (160) mit dem ersten Kontaktbereich (116) und ein weiterer Spannungsabgriff (144) mit dem zweiten Kontaktbereich (118) verbunden ist.

14. Zellverbinder nach einem der Ansprüche 11 bis 13, **dadurch gekennzeichnet, dass** mindestens ein Spannungsabgriff (144, 160) des Zellverbinders (112) in nur einer Materiallage (136a) des Grundkörpers (114) des Zellverbinders (112) ausgebildet ist.

15. Verfahren zum Herstellen eines Zellverbinders (112), der einen ersten Kontaktbereich (116) zum Verbinden mit einem ersten Zellterminal (108a) einer ersten elektrochemischen Zelle (102a) und einen zweiten Kontaktbereich (118) zum Verbinden mit einem zweiten Zellterminal (108b) einer zweiten elektrochemischen Zelle (102b) umfasst, **gekennzeichnet durch** folgenden Verfahrensschritt:
- Falten einer Grundkörper-Vorform (158) längs mindestens einer Faltlinie (138) zur Erzeugung eines einstückigen mehrlagigen Grundkörpers (114) des Zellverbinders (112);
wobei mindestens zwei Materiallagen (136a, 136b) des Grundkörpers (114) im Wesentlichen flächig aneinander anliegen,
wobei der Grundkörper (114) des Zellverbinders (112) einen elastisch und/oder plastisch verformbaren Kompensationsbereich (124), der den ersten Kontaktbereich (116) und den zweiten Kontaktbereich (118) miteinander verbindet und eine Bewegung dieser Kontaktbereiche (116, 118) relativ zueinander ermöglicht, umfasst,
wobei der Kompensationsbereich (124) eine Wellenstruktur aufweist, die eine oder mehrere Wellen mit einer parallel zu einer Axialrichtung (104) der **durch** den Zellverbinder (112) miteinander zu verbindenden elektrochemischen Zellen (102a, 102b) gerichteten Amplitude umfasst, und wobei der Kompensationsbereich (124) in zwei oder mehr aufeinanderliegenden Materiallagen (136a, 136b) ausgebildet ist.

## Claims

1. Cell connector for the electrically conductive connection of a first cell terminal (108a) of a first electrochemical cell (102a) and a second cell terminal (108b) of a second electrochemical cell (102b) of an electrochemical device (100), the cell connector (112) comprising a first contact region (116) for connection to the first cell terminal (108a) and a second contact region (118) for connection to the second cell terminal (108b),
wherein the cell connector (112) comprises a base body (114) made of two or more material layers (136a, 136b), at least two material layers (136a, 136b) being connected to one another in one piece along a fold line (138),
wherein at least two material layers (136a, 136b) lie substantially flat on one another,
wherein the base body (114) of the cell connector (112) has a resiliently and/or plastically deformable compensation region (124), which connects the first contact region (116) and the second contact region (118) to one another and allows a movement of these contact regions (116, 118) relative to one another, and
wherein the compensation region (124) has a corrugated structure, which comprises one or more corrugations with an amplitude directed parallel to an axial direction (104) of the electrochemical cells (102a, 102b) to be connected to each other by the cell connector (112),
**characterised in that**
the compensation region (124) is configured in two or more material layers (136a, 136b) lying on one another.

2. Cell connector according to claim 1, **characterised in that** at least one fold line (138) runs, at least in portions, transversely to a connection direction (110), which connects a centre of the first contact region (116) and a centre of the second contact region (118) to one another.

3. Cell connector according to claim 2, **characterised in that** at least one fold line (138) runs substantially perpendicularly to the connection direction (110).

4. Cell connector according to any one of claims 1 to 3, **characterised in that** at least one portion of at least one fold line (138) runs along a lateral edge of the first contact region (116) or of the second contact region (118).

5. Cell connector according to any one of claims 1 to 4, **characterised in that** at least one fold line (138) runs, at least in portions, substantially parallel to a connection direction (110), which connects a centre of the first contact region (116) and a centre of the second contact region (118) to one another.

6. Cell connector according to any one of claims 1 to 5, **characterised in that** at least one fold line (138), in a first portion (176), runs along a lateral edge of the first contact region (116) and, in a second portion (178), along a lateral edge of the second contact region (118).

7. Cell connector according to claim 6, **characterised in that** the fold line (138) is interrupted between the first portion (176) and the second portion (178) by a recess (180).

8. Cell connector according to any one of claims 1 to 7, **characterised in that** at least one of the material layers (136b) of the base body (114) comprises at least two part material layers (184a, 184b), which are connected in one piece to another material layer (136a) along fold lines (138a, 138b) that are different from one another.

9. Cell connector according to any one of claims 1 to 8, **characterised in that** at least one of the material layers (136a) of the base body (114) is connected in one piece to two other material layers (136b, 136c) along fold lines (138a, 138b) that are different from one another.

10. Cell connector according to any one of claims 1 to 9, **characterised in that** the compensation region (124) of the cell connector (112) has at least one compensation corrugation, compensation bead or compensation bend line running transversely to a connection direction (110), which connects a centre of the first contact region (116) and a centre of the second contact region (118) to one another.

11. Cell connector according to any one of claims 1 to 10, **characterised in that** the base body (114) of the cell connector (112) comprises at least one voltage tap (144, 160).

12. Cell connector according to claim 11, **characterised in that** at least one voltage tap (144, 160) is strip-like.

13. Cell connector according to either of claims 11 or 12, **characterised in that** the base body (114) of the cell connector (112) comprises at least two voltage taps (144, 160), one voltage tap (160) being connected to the first contact region (116) and a further voltage tap (144) being connected to the second contact region (118).

14. Cell connector according to any one of claims 11 to 13, **characterised in that** at least one voltage tap (144, 160) of the cell connector (112) is formed in only one material layer (136a) of the base body (114) of the cell connector (112).

15. Method for producing a cell connector (112), which comprises a first contact region (116) for connection to a first cell terminal (108a) of a first electrochemical cell (102a) and a second contact region (118) for connection to a second cell terminal (108b) of a second electrochemical cell (102b), **characterised by** the following method step:
- folding a base body blank (158) along at least one fold line (138) for producing a one-piece multi-layer base body (114) of the cell connector (112);
wherein at least two material layers (136a, 136b) of the base body (114) lie substantially flat on one another,
wherein the base body (114) of the cell connector (112) has a resiliently and/or plastically deformable compensation region (124), which connects the first contact region (116) and the second contact region (118) to one another and allows a movement of these contact regions (116, 118) relative to one another, and
wherein the compensation region (124) has a corrugated structure which comprises one or more corrugations with an amplitude directed parallel to an axial direction (104) of the electrochemical cells (102a, 102b) to be connected to each other by the cell connector (112) and wherein the compensation region (124) is configured in two or more material layers (136a, 136b) lying on one another.

## Revendications

1. Connecteur de cellule pour la connexion électro-conductrice d'une première borne de cellule (108a) d'une première cellule électrochimique (102a) et d'une deuxième borne de cellule (108b) d'une deuxième cellule électrochimique (102b) d'un dis-positif électrochimique (100), le connecteur de cellule (112) comprenant une première zone de contact (116) pour la connexion avec la première borne de cellule (108a) et une deuxième zone de contact (118) pour la connexion avec la deuxième borne de cellule (108b), le connecteur de cellule (112) comprenant un corps de base (114) constitué de deux couches de matériau (136a, 136b) ou plus, au moins deux couches de matériau (136a, 136b) étant reliés entre elles d'une seule pièce le long d'une ligne de pliage (138),
au moins deux couches de matériau (136a, 136b) étant appuyées sensiblement à plat l'une contre l'autre,
le corps de base (114) du connecteur de cellule (112) comprenant une zone de compensation (124) déformable de manière élastique et/ou plastique, qui relie la première zone de contact (116) et la deuxième zone de contact (118) entre elles et permet un mouvement relatif de ces zones de contact (116, 118) entre elles, et
la zone de compensation (124) présentant une structure ondulée qui comprend une ou plusieurs ondulations, avec une amplitude orientée parallèlement à une direction axiale (104) des cellules électrochimiques (102a, 102b) à relier entre elles par le connecteur de cellule (112),
**caractérisé en ce que**
la zone de compensation (124) est réalisée dans deux ou plus couches de matériau (136a, 136b) superposées.

2. Connecteur de cellule selon la revendication 1, **caractérisé en ce qu'**au moins une ligne de pliage (138) s'étend au moins partiellement transversalement par rapport à une direction de connexion (110), qui relie entre eux un centre de la première zone de contact (116) et un centre de la deuxième zone de contact (118).

3. Connecteur de cellule selon la revendication 2, **caractérisé en ce qu'**au moins une ligne de pliage (138) s'étend sensiblement perpendiculairement à la direction de connexion (110).

4. Connecteur de cellule selon l'une des revendications 1 à 3, **caractérisé en ce qu'**au moins une portion d'au moins une ligne de pliage (138) s'étend le long d'un bord latéral de la première zone de contact (116) ou de la deuxième zone de contact (118).

5. Connecteur de cellule selon l'une des revendications 1 à 4, **caractérisé en ce qu'**au moins une ligne de pliage (138) s'étend, au moins partiellement, sensiblement parallèlement à une direction de connexion (110), qui relie entre eux un centre de la première zone de contact (116) et un centre de la deuxième zone de contact (118).

6. Connecteur de cellule selon l'une des revendications 1 à 5, **caractérisé en ce qu'**au moins une ligne de pliage (138) s'étend dans une première portion (176) le long d'un bord latéral de la première zone de contact (116) et dans une deuxième portion (178) le long d'un bord latéral de la deuxième zone de contact (118).

7. Connecteur de cellule selon la revendication 6, **caractérisé en ce que** la ligne de pliage (138) est interrompue entre la première portion (176) et la deuxième portion (178) par un évidement (180).

8. Connecteur de cellule selon l'une des revendications 1 à 7, **caractérisé en ce qu'**au moins une des couches de matériaux (136b) du corps de base (114) comprend au moins deux couches d'un matériau partielles (184a, 184b) qui sont reliées d'une seule pièce avec une autre couche de matériau (136a) le long de lignes de pliage (138a, 138b) distinctes l'une de l'autre.

9. Connecteur de cellule selon l'une des revendications 1 à 8, **caractérisé en ce qu'**au moins une des couches de matériau (136a) du corps de base (114) sont reliées d'une seule pièce avec deux autres couches de matériau (136b, 136c) le long de lignes de pliage (138a, 138b) distinctes l'une de l'autre.

10. Connecteur de cellule selon l'une des revendications 1 à 9, **caractérisé en ce que** la zone de compensation (124) du connecteur de cellule (112) comprend au moins une ondulation de compensation, une moulure de compensation ou une ligne de pliage de compensation s'étendant transversalement par rapport à une direction de connexion (110), qui relie un centre de la première zone de contact (116) et un centre de la deuxième zone de contact (118).

11. Connecteur de cellule selon l'une des revendications 1 à 10, **caractérisé en ce que** le corps de base (114) du connecteur de cellule (112) comprend au moins une prise de tension (144, 160).

12. Connecteur de cellule selon la revendication 11, **caractérisé en ce qu'**au moins une prise de tension (144, 160) est réalisée sous la forme d'une nervure.

13. Connecteur de cellule selon l'une des revendications 11 ou 12, **caractérisé en ce que** le corps de base (114) du connecteur de cellule (112) comprend au moins deux prises de tension (144, 160), une prise de tension (160) étant relié à la première zone de contact (116) et une autre prise de tension (144) étant reliée à la deuxième zone de contact (118).

14. Connecteur de cellule selon l'une des revendications 11 à 13, **caractérisé en ce qu'**au moins une prise de tension (144, 160) du connecteur de cellule (112) est réalisée dans une seule couche d'un matériau (136a) du corps de base (114) du connecteur de cellule (112).

15. Procédé de fabrication d'un connecteur de cellule (112), qui comprend une première zone de contact (116) pour la connexion avec une première borne de cellule (108a) d'une première cellule électrochimique (102a) et une deuxième zone de contact (118) pour la connexion avec une deuxième borne de cellule (108b) d'une deuxième cellule électrochimique (102b), **caractérisé par** l'étape de procédé suivante :
- pliage d'un ébauche de corps de base (158) le long d'au moins une ligne de pliage (138) pour la réalisation d'un corps de base monobloc multicouche (114) du connecteur de cellule (112) ;
au moins deux couches de matériau (136a, 136b) du corps de base (114) sont appuyées sensiblement à plat l'une contre l'autre,
le corps de base (114) du connecteur de cellule (112) comprenant une zone de compensation (124) déformable de manière élastique et/ou plastique, qui relie entre elles la première zone de contact (116) et la deuxième zone de contact (118) et qui permet un mouvement de ces zones de contact (116, 118) l'une par rapport à l'autre,
la zone de compensation (124) présentant une structure ondulée qui comprend une ou plusieurs ondulations avec une amplitude orientée parallèlement à une direction axiale (104) des cellules électrochimiques (102a, 102b) à relier entre elles par l'intermédiaire du connecteur de cellule (112) et la zone de compensation (124) étant réalisée dans deux ou plus couches de matériau superposées (136a, 136b).
